Europäisches Patentamt

European Patent Office

Office européen des brevets

(19)

(11) **EP 1 088 417 B1**

(12) # EUROPEAN PATENT SPECIFICATION

(45) Date of publication and mention
of the grant of the patent:
**22.09.2004 Bulletin 2004/39**

(51) Int Cl.⁷: **H04J 14/02**

(86) International application number:
**PCT/EP1999/003915**

(21) Application number: **99927899.7**

(22) Date of filing: **07.06.1999**

(87) International publication number:
**WO 1999/065174 (16.12.1999 Gazette 1999/50)**

(54) **METHOD AND DEVICE FOR DROPPING OPTICAL CHANNELS IN AN OPTICAL TRANSMISSION SYSTEM**

VERFAHREN UND VORRICHTUNG ZUR ABZWEIGUNG VON OPTISCHEN KANÄLEN IN EINEM OPTISCHEN ÜBERTRAGUNGSSYSTEM

PROCEDE ET DISPOSITIF DE DERIVATION DE CANAUX OPTIQUES DANS UN SYSTEME DE TRANSMISSION OPTIQUE

(84) Designated Contracting States:
**DE ES FR GB IT NL SE**

(30) Priority: **09.06.1998 EP 98110594**
**15.06.1998 US 89285 P**

(43) Date of publication of application:
**04.04.2001 Bulletin 2001/14**

(73) Proprietor: **Corning Photonic Technologies Inc.**
**Dover, DE 19901 (US)**

(72) Inventors:
• **AINA, Stefano**
**I-20126 Milan (IT)**
• **BAROZZI, Gianpaolo**
**I-20092 Cinisello B. (IT)**

• **MELI, Fausto**
**I-29100 Piacenza (IT)**

(74) Representative: **Bottero, Claudio et al**
**Porta, Checcacci & Associati S.p.A.**
**Via Trebbia, 20**
**20135 Milano (IT)**

(56) References cited:
**EP-A- 0 814 629**          **EP-A- 0 833 473**

• **WILLNER A E ET AL: "OPTICALLY-AMPLIFIED WDM RING NETWORK INCORPORATING CHANNEL -DROPPINGFILTERS" IEEE PHOTONICS TECHNOLOGY LETTERS, vol. 6, no. 6, 1 June 1994 (1994-06-01), pages 760-763, XP000457241 ISSN: 1041-1135**

**Description**

It is an object of the present invention to provide a method and a device for dropping optical channels in an optical transmission system, and more particularly in a wavelength division multiplexing (WDM) optical transmission system.

In the latest telecommunications technology, it is known to use optical fibers to send optical information-carrying signals for long-distance communication.

Optical telecommunication systems are known that use WDM transmission. In these systems transmission signals including several optical channels are sent over the same line by means of wavelength division multiplexing. The transmitted channels may be either digital or analog and are distinguishable because each of them is associated with a specific wavelength.

The Applicant has observed that known WDM communication systems are limited as concerns the number of channels, i.e. the independent wavelengths that can be used for transmission within the wavelength band available for signal transmission and amplification.

In order to combine and separate signals with different wavelengths--to combine the signals at the transmission station, for example, to drop some toward receivers located at intermediate nodes of the line or to introduce others at intermediate nodes or to send them to separate receivers at the receiving station-- adjacent channels (in wavelength terms) must be separated by more than a minimum predetermined value. Said minimum value depends on the characteristics of the components employed in the system, such as the spectral characteristics of the wavelength selective components (e.g. bandwidth, center-band attenuation, figure of merit) and the wavelength stability (thermal and temporal) of the selective components themselves and of optical signal sources.

In particular, the Applicant has observed that the spectral selectivity of currently available wavelength selective components may greatly limit the possibility of adding and dropping signals in multichannel transmission systems, particularly when there are signals with close wavelengths, e.g. separated by less than 2 nm.

Several add and drop systems use fiber Bragg gratings (normally reflective or blazed Bragg gratings) to selectively transmit one of more of the channels and reflect the others. Reflected channels can be eliminated, as in the case blazed Bragg gratings are used, or re-routed on a different optical path, for example by means of an optical circulator.

Several documents, such as US patent 5,283,686, US patent 5,608,825, US patent 5,555,118, US patent 5,748,349 and EP patent 730,172 depict add/drop devices in which channel separation is performed by using Bragg gratings in combination with optical circulators. A further similar approach is explored in Giles and Mizrahi, "Low-Loss ADD/DROP Multiplexer for WDM Lightwave Networks", IOOC Technical Digest, (The Chinese University Press, Hong Kong) c.1995, pp. 65-67. Usually, Bragg gratings are positioned in series to a first output port of a circulator to reflect either the channels that have to be dropped or the other channels. The channels reflected by the gratings re-enter the circulator and are routed on a different path through the next output port. Circulators and Bragg gratings may be combined in different ways so as to split the input channels group in several sub-group or to differently route every single channel (as in US patent 5,608,825).

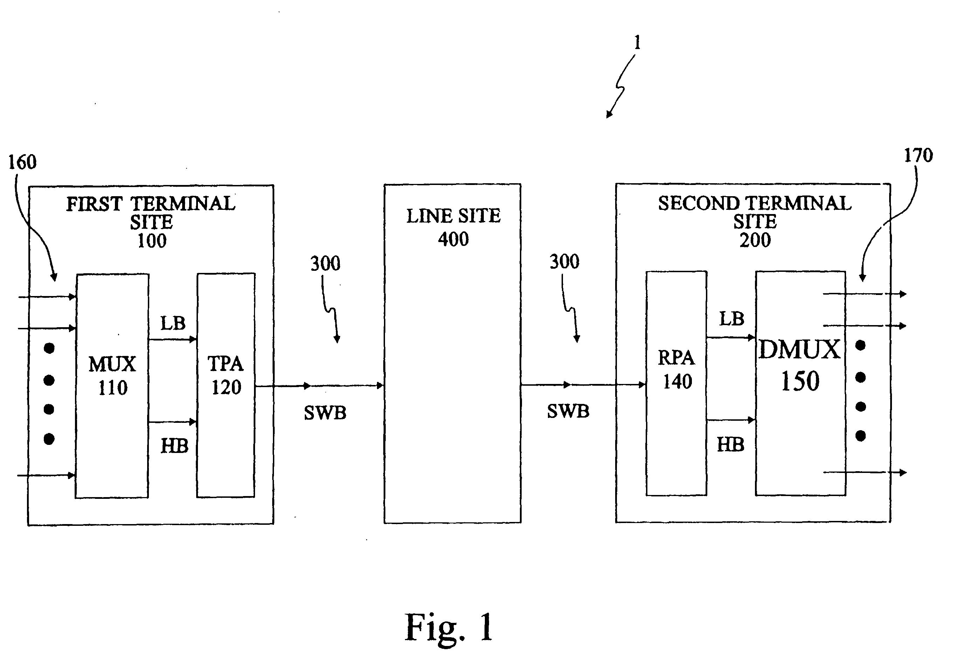

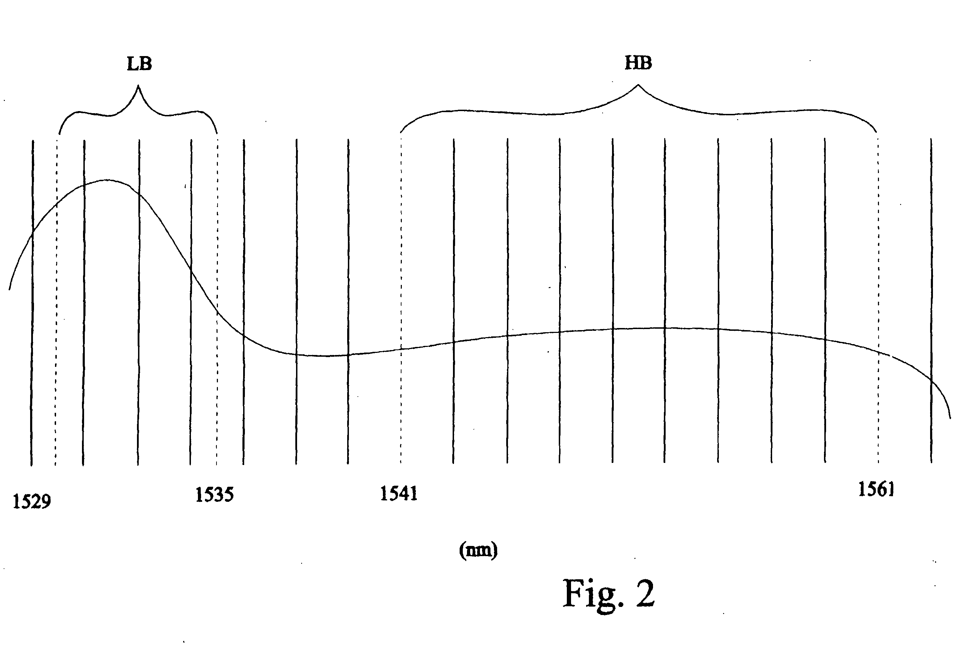

In particular, US patent 5,748,349 shows a grating-based add-drop multiplexer in which plural optical channels can be added and/or dropped in the same optical device in a manner which avoids transmitting an optical channel through a radiation mode loss region of a Bragg grating. In one embodiment, the add-drop multiplexer comprises a three-port optical circulator, an optical coupler, and a transmission path communicating with both the circulator and the optical coupler. A set of one or more Bragg gratings is positioned in the transmission path for reflected signals to be dropped towards the circulator and onto a "drop" path. The through optical signals enter the first coupler input port and are combined with the "add" signal transmitted by the second coupler input port. The coupler optically combines these optical signals and outputs the combined optical signal. The optical signals added by the add-drop multiplexer are not reflected by the set of gratings which are used to drop optical channels, avoiding any problems with transmission through the radiation mode loss region of a grating. US patent 5,748,349 also shows that in a grating-based add-drop multiplexer in which the add operations are performed by means of a second circulator serially connected to the set of gratings (as illustrated in fig. 1), one or more optical channels are potentially transmitted through the radiation mode loss region of at least one grating (as shown in fig. 2), undergoing an undesired attenuation.

EP patent 730,173 presents an alternative technique for dropping and adding channels, in which Bragg gratings are used in combination with multidielectric pass-band filters to extract the dropping channels from the whole group of channels and then to add new channels to the remaining group of channels. In details, a first multidielectric pass-band filter receives a group of optical channels, selectively transmits at least one of them - e.g. the dropping channels - and reflects the others. A first Bragg grating receives the reflected signals from the first multidielectric pass-band filter and transmits them while reflecting residual signals of dropping channels. The channels transmitted by the first Bragg grating are received by a second multidielectric pass-band filter, where channels having the same wavelength as the dropped channels are added. A second Bragg grating receives the dropping channels transmitted by the first multidielectric pass-band filter and transmit them further, while reflecting residual signals of channels not completely reflected by the first multidielectric pass-band filter.

A further technique to achieve the separate routing of the dropping channels is proposed by US patent 5,555,118, in which Bragg gratings are used in combination with a first directional coupler. The gratings are coupled in series to one of the outputs of the first coupler to reflect back all the channels but the ones to drop. The reflected channels re-enter the first coupler and are then fed to an output optical fiber. A second directional coupler is added to allow the insertion of new channels. Bragg gratings are coupled to one output of this second directional coupler to reflect back only the add channels, which re-enter the second coupler and exit from a different output. Another optical fiber couples the two directional couplers to transmit the add channel from the second coupler to the first, where the add channels are added to the other channels.

EP patent 713,110 proposes a single mode optical waveguide filter which includes the series combination comprising two optical waveguide blazed gratings optically in tandem with an optical waveguide normally reflective Bragg grating, wherein the periodicities of the three Bragg gratings are such that the blazed gratings are spectrally selectively mode coupling respectively over spectrally separated wavebands $\lambda_1$ and $\lambda_2$, while the normally reflective gratings is spectrally selectively reflecting over a waveband $\lambda_3$ which at least compasses the spectral waveband separating waveband $\lambda_1$ from waveband $\lambda_2$, which series combination is optically coupled with one port of an optical multiport device consisting of an optical circulator or an optical 4-port 3 dB coupler.

US patent 5,457,760 discloses using both optical couplers and Bragg gratings to make a demultiplexer in which N different channels are received from a single waveguide and each of them is differently routed. In practice, a 1xN splitter optically couples a single input waveguide conveying N optical channels to N output waveguides; each output waveguide includes (N-1) Bragg gratings which allow the passage of only a single respective channel. A specular device using a Nx1 coupler may be used to perform multiplexing of N channels.

International patent application WO96/24871 relates to an arrangement and a method for selectively switching wavelength channels to and from an optical fibre. The arrangement comprises at least two fibre couplers and one or more fibre gratings arranged between these. The first fibre coupler is adapted to take off a component of the signal and to switch another component of the signal to a fibre grating. The strength ratio between the component signals can be varied arbitrarily. The fibre grating is adapted to function as a band reflex filter and to prevent selected wavelengths from continuing on the fibre and to reflect these back in the fibre. Other wavelengths are allowed to pass further in the arrangement. The second fibre coupler is arranged in a position on the other side of the fibre grating along the optical fibre and is adapted for introduction of the wavelengths removed in the first coupler or for introduction of any other wavelength which is not already present on the fibre. Applicants observed that no specific value is given for the strength ratio for the first fibre coupler. Moreover, no suggestion is offered about how to choose an adequate strength ratio for the first fibre coupler.

The article "Wavelength reuse scheme in a WDM unidirectional ring network using a proper fibre grating add/drop multiplexer", M. J. Chawki, V. Tholey, E. Delevaque, S. Boj and E. Gay, Electronics Letters, 16th March 1995, Vol. 31, No. 6, proposes an experimental optical WDM ring network including a central node and N secondary nodes (SN) using a proper add/drop multiplexer (ADM) based on a fibre grating filter. The ADM located in each SN is made of a 2:1 coupler, a fibre grating filter, a second 2:1 coupler and an EDFA. The node receiver and transmitter are connected to one of the input ports of the first and second coupler, respectively. Applicants observed that, in each SN, drop signals are reflected by the fibre grating filter.

Applicants have found that (having balanced power splitting/coupling ratio), the channels that are transmitted unmodified through the device (i.e. channels that are not regenerated by the drop or add process) undergo an excessive power attenuation, that may become intolerable in very long optical lines with many intermediate stations. In fact, in the simplest case in which the undropped channels cross two 3 dB device or twice a same 3 dB device, a total 6 dB attenuation is introduced, which is undesirably high, particularly if compared with losses introduced by circulators. Moreover, further losses are introduced in performing dropping channel processes, for example if Bragg gratings are used, that add to the losses introduced the previously mentioned 3 dB devices.

Applicants further found that an OADM device using 3 dB type optical splitters and couplers introduces a noise penalty that, oven if not excessive for a singie line site, could be troublesome in a long line system where many line site are present.

Applicants has noticed that OADM devices in which channels reflected by Bragg grating are further used in the system (e.g. are directed into the drop path or further transmitted onto the transmission line) present a drawback, due to the fact that a Bragg grating has a reflection characteristic showing the presence of side-bands laterally to the reflection peak. The present channel density is such that those side-bands may extend into the spectral band of adjacent channels, generating interferences between adjacent channels.

In accordance with the present invention, a method and a device have been developed to efficiently add and/or drop channels in a long distance optical transmission system, improving in some aspects the above mentioned techniques and overcoming some drawbacks hereinbefore described.

It is found in particular that a device for dropping channels from a line (ODM) introducing relatively low attenuation and low noise for the undropped channels can be made by using a splitter having an unbalanced power splitting ratio (i.e. a splitting device different from the commonly used 3 dB devices).

It is further found that an ODM device of the above mentioned type can advantageously include Bragg gratings positioned between the coupler and the line to eliminate the drop channel from the path connecting the input and the output of the device. Said Bragg gratings are used in a transmission mode for the undropped channels and in a reflection mode for the drop channels, so the undropped channels are free from side-bands problems, while the reflected drop channel, affected by side-bands problems, are suppressed.

Also, an ODM device of the above mentioned type can be integrated with an optical coupler positioned between the gratings and the line, to allow the insertion of add channels from an add path into the line. The resulting device is an OADM device performing both dropping and adding operations.

Furthermore, the Applicant found that, if the number of channel to drop and add is high, two or more OADM devices of the above mentioned type can be selectively connected to the line by means of an input and an output optical switch.

In its first aspect, the present invention relates to a method for dropping optical channels in an optical transmission system, said optical transmission system including an optical line conveying a multi-channel optical signal, the method comprising receiving from the optical line an input signal including at least part of the channels of said multi-channel optical signal, said input signal including at least one drop channel to be extracted from the optical line; splitting said input signal into a first optical power fraction defining a pass-through signal and at least a second optical power fraction defining a drop signal comprising said drop channel, said first optical power fraction being greater than said second optical power fraction; suppressing from said pass-through signal said at least one drop channel; feeding to said optical line an output signal including at least a power fraction of said pass-through signal.

Preferably said first optical power fraction is between 60% and 90% of total optical power of said input signal.

Preferably the step of suppressing includes the step of retro-reflecting said at least one drop channel from said pass-through signal. The step of suppressing can further comprise the step of blocking said at least one retro-reflected drop channel.

The method can further comprise the step of coupling, with an unbalanced coupling ratio, said pass-through signal with an add signal to be inserted into the optical line obtaining said output signal; said output signal including a power fraction of said pass-through signal greater than 50%. Preferably said power fraction of said pass-through signal within said output signal is between 60% and 90%.

The method can further comprise the step of demultiplexing said drop signal to extract from said drop signal said at least one drop channel. It can further comprise the step of multiplexing add channels to obtain said add signal, and/or the step of amplifying said add signal before coupling said add signal with said pass-through signal.

The method can further comprise the step of suppressing, from said drop signal, at least one channel other than said at least one drop channel, before demultiplexing said drop signal. In particular, the step of suppressing, from said drop signal, at least one channel other than said at least one drop channel, can include the step of retro-reflecting said channels other than said at least one drop channel. The step of suppressing, from said drop signal, at least one channel other than said at least one drop channel, can further comprise the step of blocking said retro-reflected channels other than said at least one drop channel.

The method can further comprising selectively switching said input signal into at least two optical add/drop paths in each of which said steps of receiving said input signal, splitting said input signal, suppressing from said pass-through signal said at least one drop channel and feeding to said optical line an output signal including at least part of said pass-through signal, are performed for a respective sub-band of said input signal.

In another aspect, the present invention includes a device for dropping optical channels in an optical transmission system, said optical transmission system including an optical line for conveying a multi-channel optical signal, the device comprising an input optically coupled to said optical line to receive from said optical line an input signal including at least one drop channel to be extracted from the optical line; an output optically coupled to said optical line to feed to said optical line an output signal including at least part of the channels of said multi-channel optical signal; an optical splitter, having an input port optically coupled to said input and at least a first and a second output port, and having an unbalanced optical power splitting ratio for feeding a first optical power fraction of said input signal, defining a pass-through signal, to said first output port, and a second optical power fraction of said input signal, defining at least one drop signal, to said at least one second output port, said first optical power fraction being greater than said second optical power fraction; a line optical path optically coupling the first output port of said optical splitter to said output; at least one drop optical path optically coupled to said at least one second output port of said optical splitter; channel suppression means, interposed between said input and said output, for suppressing said at least one drop channel from said pass-through signal.

In a preferred embodiment said first power fraction is between 60% and 90% of total optical power of said input signal.

Said channel suppression means (678, 679) can include wavelength-selective retro-reflecting means (678), positioned along said line optical path (675) between said optical splitter (673) and said output (672) and having at least one wavelength of maximum reflection corresponding to the wavelength of said at least one drop channel. Said wavelength-selective retro-reflecting means (678) can include Bragg gratings, in particular back-reflective Bragg gratings, or blazed Bragg gratings.

Said channel suppression means (678, 679) can further include unidirectional transmitting means (679) interposed between said input (671) and said wavelength-selective retro-reflecting means (678) and so oriented to allow only transmission from said input (671) to said wavelength-selective retro-reflecting means (678). In a preferred embodiment said unidirectional transmitting means (679) includes an optical isolator.

The device can further comprise:

- an add path (677), conveying an add signal to be inserted into the optical line;
- an optical coupler (674) having a first input port optically coupled to said line optical path (675) to receive said pass-trough signal, a second input port optically coupled to said add path (677) to receive said add signal and an output port optically coupled to said output (672) to feed to said output (672) said output signal, and having an unbalanced optical power coupling ratio for feeding to said output said output signal including a power fraction of said pass-through signal greater than 50%. Advantageously, said power fraction of said pass-through signal within said output signal is between 60% and 90%.

The device can further comprise at least one demultiplexer (680; 682) having an input port optically coupled to said at least one drop optical path (676) to receive said drop signal and at least one output port for the at least one drop channel.

The device can further comprise at least one multiplexer (681) having at least one input port to receive at least one add channel and an output port optically coupled to said add path (677) for feeding said add signal including said at least one add channel to said add path (677). Advantageously it further comprises an optical amplifier (684) positioned along said add path (677) to amplify said add signal.

The device can further comprise further wavelength-selective retro-reflecting means (683), positioned along said drop path (676) and having at least one wavelength of maximum reflection corresponding to the wavelength of at least one channel other than said at least one drop channel. Said further wavelength-selective retro-reflecting means (683) preferably indude Bragg gratings, such as back-reflective Bragg gratings or blazed Bragg gratings.

Said optical splitter (673) can include a fused tapered optical splitter. It can also include a micro-optics splitter.

Said optical coupler (674) can include a fused tapered optical coupler. It can also include a micro-optics coupler.

In a further aspect, the invention includes a unit for dropping optical channels in an optical transmission system, said optical transmission system including an optical line for conveying a multi-channel optical signal, the unit comprising at least two devices for dropping optical channels in an optical transmission system according to the hereinbefore description, each of said devices dropping channels in a respective sub-band of said multi-channel optical signal; a first optical switch, having an input port optically coupled to the optical line and at least two outputs ports each optically coupled to the input of a respective said device, said output ports being selectively optically coupled to said input port; a second optical switch, having at least two input ports each optically coupled to the output of a respective said device and an output port optically coupled to said optical line, said input ports being selectively optically coupled to said output port.

In another aspect, the invention relates to an optical transmission system, comprising an optical fiber line; a first terminal site optically coupled to said optical fiber line, to transmit optical signals into said optical fiber line; a second terminal site optically coupled to said optical fiber line, to receive optical signals from said optical fiber line; at least one line site positioned along said optical fiber line between said first and second terminal sites, and comprising at least one device or one unit for dropping and/or adding optical channels according to the former embodiments.

It is to be understood that both the foregoing general description and the following detailed description are exemplary and explanatory only and are not restrictive of the invention as claimed. The following description, as well as the practice of the invention, set forth and suggest additional advantages and purposes of this invention.

The accompanying drawings, which are incorporated in and constitute a part of this specification, illustrate embodiments of the invention, and together with the description, explain the advantages and principles of the invention.

Fig. 1 is a block diagram of an optical transmission system consistent with the present invention;
Fig. 2 is a graph of a gain characteristic for an erbium-doped fiber spectral emission range, with a designation of a low band and a high band;
Fig. 3 is a more detailed diagram of the multiplexing section of the optical transmission system in Fig. 1;
Fig. 4 is a more detailed diagram of the transmitter power amplifier section of the optical transmission system in Fig. 1;

Fig. 5 is a graph of a filter performance shape of a de-emphasis filter for the transmitter power amplifier of the present invention;

Fig. 6 is a more detailed diagram of a line site of the optical transmission system in Fig. 1;

Fig. 7 is a first embodiment of an OADM device for adding/dropping signals according to the invention;

Fig. 8 is a second embodiment of an OADM device for adding/dropping signals according to the invention;

Fig. 9 is a third embodiment of an OADM device for adding/dropping signals according to the invention;

Figs. 10a to 10i are wavelength spectra detected in different portions of an OADM device according to the invention, during transmission experiments;

Fig. 11 is a more detailed diagram of the receiver pre-amplifier section of the optical transmission system in Fig. 1; and

Figs. 12A and 12B are more detailed diagrams of the demultiplexing section of the optical transmission system in Fig. 1.

Referring to Fig. 1, an optical transmission system 1 includes a first terminal site 100, a second terminal site 200, an optical fiber line 300 connecting the two terminal sites 100, 200, and at least one line site 400 interposed between the terminal sites 100 and 200 along the optical fiber line 300.

For simplicity, optical transmission system 1 hereinafter described is unidirectional, that is signals travel from a terminal site to the other (in the present case from the first terminal site to the second terminal site), but any consideration that follow is to considered valid also for bidirectional systems, in which signals travel in both directions.

First terminal site 100 preferably includes a multiplexing section (MUX) 110, a transmitter power amplifier (TPA) section 120 and a plurality of input channels 160. Second terminal site preferably includes a receiver pre-amplifier (RPA) section 140, a demultiplexing section (DMUX) 150 and a plurality of output channels 170.

Input channels 160 may, for example, include 8, 16, 32 or 64 channels, each having a distinct carrier wavelength, or some other total of channels depending on the needs and requirements of the particular optical transmission system. Each input channel 160 is received by multiplexing section 110. As shown in Fig. 1, multiplexing section 110 multiplexes or groups input channels 160 preferably into two sub-bands, referred to as low-band LB and high-band HB, although multiplexing section 110 could alternatively group input channels 160 into a single wide-band SWB or a number of sub-bands greater than two.

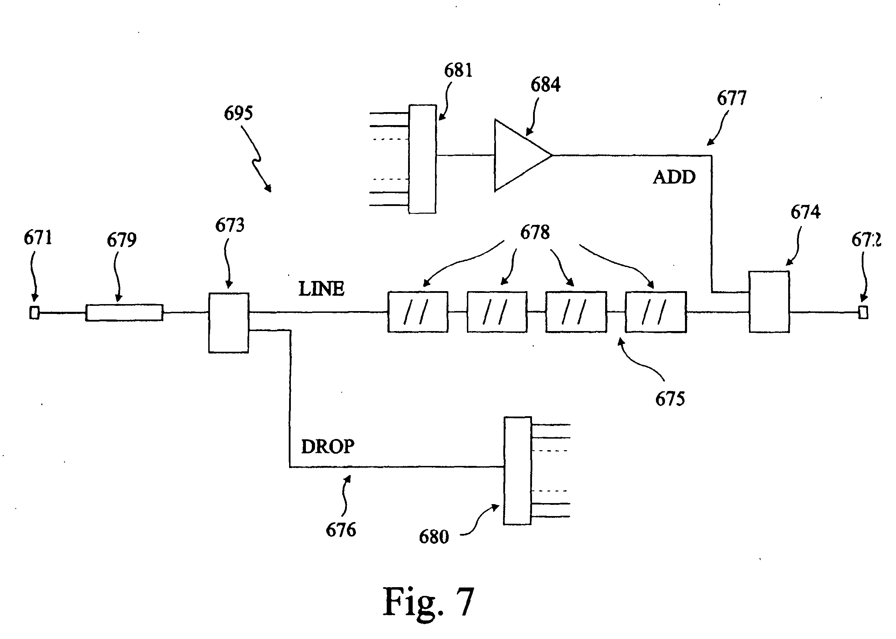

The two sub-bands LB and HB are then received, as separate sub-bands or as a combined wide-band, in succession by TPA section 120, at least one line site 400 and second terminal site 200. Sections of optical fiber line 300 adjoin the at least one line site 400 with TPA section 120, RPA section 140, and possibly with others line sites 400 (not shown). TPA section 120 receives the separate sub-bands LB and HB from multiplexing section 110, amplifies and optimizes them, and then combines them into a single wide-band SWB for transmission on a first section of optical fiber line 300. Line site 400 receives the single wide-band SWB and re-divides it into the two sub-bands LB and HB, eventually adds and drops signals in each sub-band LB, HB, amplifies and optimizes the two sub-bands LB and HB and then recombines them into the single wide-band. For the adding and dropping operations, line site 400 is provided with Optical Add/Drop Multiplexers (OADM), described later on with reference to Fig. 7 and representing an aspect of the present invention.

A second section of optical fiber line 300 couples the output of the line site 400 to either another line site 400 (not shown) or to RPA section 140 of second terminal site 200. RPA section 140 also amplifies and optimizes the single wide-band SWB and may split the single wide-band into the two sub-bands LB and HB before outputting them.

Demultiplexing section 150 then receives the two sub-bands LB, HB from RPA section 140 and splits the two sub-bands LB, HB into the individual wavelengths of output channels 170. The number of input channels 160 and output channels 170 may be unequal, owing to the fact that some channels are dropped and/or added in line site (or line sites) 400.

Both sub-bands LB, HB are within the spectral emission range of the optical fiber amplifiers used in the terminal and line sites 100, 200, 400. In a preferred embodiment, the fiber amplifiers in those sections of WDM system 1 are erbium-doped fiber amplifiers. As a result, the two sub-bands LB, HB fall between 1528 nm and 1562 nm. A third band can be provided between 1562 and 1620 nm, in which a great number of channel can be allocated.

Fig. 2 is a graph of the erbium-doped fiber amplifier spectral emission range of 1528-1562 nm, which generally shows the different gain for channels of signals traveling through the erbium-doped fiber link. As shown in Fig. 2, the spectrum is divided in MUX 110 into two ranges that correspond to the low band LB and the high band HB. In particular, the low band LB preferably covers the range between 1529 nm and 1535 nm, and the high band HB preferably covers the range between 1541 nm and 1561 nm. The gain characteristic in the high band HB is fairly flat, but the low band LB includes a substantial hump in the gain response. As explained below, to make use of the erbium-doped fiber spectral emission range in the low band LB, optical transmission system 1 uses equalizing means to flatten the gain characteristic in that range. As a result, by dividing the entire erbium-doped fiber spectral emission range of 1528-1562 nm into two sub-ranges that correspond to the low band LB and high band HB, optical transmission system 1 can effectively use most of the erbium-doped fiber spectral emission range and provide for dense WDM.

The following provides a more detailed description of the various modules of the present invention depicted in Fig. 1.

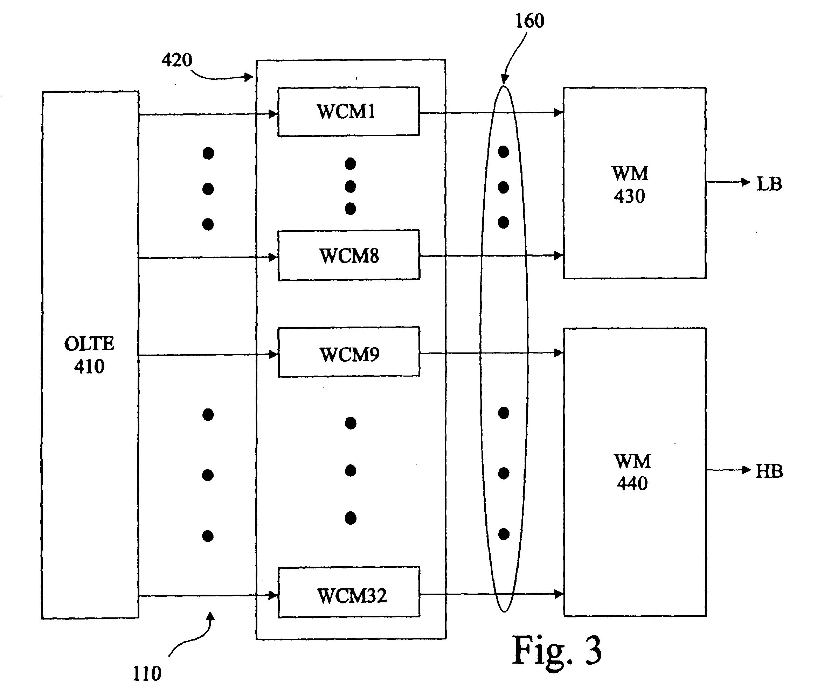

Referring to Fig. 3, a more detailed diagram of multiplexing section 110 of first terminal site 100 illustrates an optical line terminal section (OLTE) 410, a wavelength converter section (WCS) 420, and two wavelength multiplexers (WM) 430 and 440. OLTE 410, which may correspond to standard line terminating equipment for use in a SONET, ATM, IP or SDH system, includes transmit/receive (TX/RX) units (not shown) in a quantity that equals the number of channels in WDM systems 100. In a preferred embodiment, OLTE 410 has thirty-two (32) TX/RX units. As readily understood to one of ordinary skill in the art, OLTE 410 may comprise a collection of smaller separate OLTEs, such as two, that feed information frequencies to WCS 420. Accordingly, WCS 420 includes thirty-two (32) wavelength converter modules WCM1-WCM32.

In multiplexing section 110, OLTE 410 transmits a plurality of signals at a generic wavelength. As shown in Fig. 3, for a preferred embodiment, OLTE 410 outputs a grouping of eight (8) signals and a grouping of twenty-four (24) signals. However, as indicated above, the number of signals may vary depending on the needs and requirements of the particular optical transmission system.

Units WCM1-WCM8 each receive one of the grouping of eight signals emitted from OLTE 410, and units WCM9-WCM32 each receive one of the grouping of twenty-four signals emitted from OLTE 410. Each unit is able to convert a signal from a generic wavelength to a selected wavelength and re-transmit the signal. The units may receive and re-transmit a signal in a standard format, such as OC-48 or STM-16, but the preferred operation of WCM1-32 is transparent to the particular data format employed.

Each WCM1-32 preferably comprises a module having a photodiode (not shown) for receiving an optical signal from OLTE 410 and converting it to an electrical signal, a laser or optical source (not shown) for generating a fixed carrier wavelength, and an electro-optic modulator such as a Mach-Zehnder modulator (not shown) for externally modulating the fixed carrier wavelength with the electrical signal. Alternatively, each WCM1-32 may comprise a photodiode (not shown) together with a laser diode (not shown) that is directly modulated with the electrical signal to convert the received wavelength to the carrier wavelength of the laser diode. As a further alternative, each WCM1-32 comprises a module having a high sensitivity receiver (e.g., according to SDH or SONET standards) for receiving an optical signal, e.g., via a wavelength demultiplexer, from a trunk fiber line end and converting it to an electrical signal, and a direct modulation or external modulation laser source. By the latter alternative, regeneration of signals from the output of a trunk fiber line and transmission in the inventive optical communication system is made possible, which allows extending the total link length.

The selected wavelength for each WCM within WCS 420 is preferably determined according to a standard grid, for example and not by way of limitation that shown in Table 1 below, such that each signal has a different wavelength. Each unit WCM1-WCM32 must be tuned and set to particular tolerances as is known in the art. Of course, the frequency separation of channels depends upon the system implementation chosen and may be, for example, 100 GHz between each channel. Alternatively, the frequency spacing may be unequal to alleviate four-wave-mixing phenomenon.

The channel allocation shown in Table 1 below is designed for both a 2.5 Gb/s system and a 10 Gb/s system. In each of these two systems, band separation still occurs, but for different wavelengths depending on whether the system is using, for example, 8, 16, or 32 channels. Although Fig. 3 shows that the signals are provided and generated by the combination of OLTE 410 and WCM1-WCM32, the signals can also be directly provided and generated by a source without limitation to their origin.

Table 1:

| Channel Allocation | | | | | | | |
|---|---|---|---|---|---|---|---|
| Nominal Channel | | 2.5 Gb/s System | | | | | | 10 Gb/s System 8 ch. |
| Thz | nm | 32 ch. | 16 ch. | 8 ch. | 8 ch. | 8 ch. | 16 ch. | |
| 196 | 1529.55 | LB | | | LB | | | |
| 195.9 | 1530.33 | LB | LB | | LB | | | |
| 195.8 | 1531.12 | LB | | | LB | | | |
| 195.7 | 1531.90 | LB | LB | LB | LB | | | LB |
| 195.6 | 1532.68 | LB | | | LB | | | |

Table 1:   (continued)

| Channel Allocation | | | | | | | |
| --- | --- | --- | --- | --- | --- | --- | --- |
| Nominal Channel | | 2.5 Gb/s System | | | | | | 10 Gb/s System 8 ch. |
| Thz | nm | 32 ch. | 16 ch. | 8 ch. | 8 ch. | 8 ch. | 16 ch. | |
| 195.5 | 1533.47 | LB | LB | LB | LB | | | LB |
| 195.4 | 1534.25 | LB | | | LB | | | |
| 195.3 | 1535.04 | LB | LB | | LB | | | |
| 194.4 | 1542.14 | HB | | | | | | |
| 194.3 | 1542.94 | HB | HB | | | | | |
| 194.2 | 1543.73 | HB | | | | | | |
| 194.1 | 1544.53 | HB | HB | | | | | |
| 194 | 1545.32 | HB | | | | | HB | |
| 193.9 | 1546.12 | HB | HB | | | HB | HB | |
| 193.8 | 1546.92 | HB | | | | | HB | |
| 193.7 | 1547.72 | HB | HB | HB | | HB | HB | |
| 193.6 | 1548.51 | HB | | | | | HB | |
| 193.5 | 1549.32 | HB | HB | HB | | HB | HB | HB |
| 193.4 | 1550.12 | HB | | | | | HB | HB |
| 193.3 | 1550.92 | HB | HB | HB | | HB | HB | HB |
| 193.2 | 1551.72 | HB | | | | | HB | HB |
| 193.1 | 1552.52 | HB | HB | HB | | HB | HB | HB |
| 193 | 1553.33 | HB | | | | | HB | HB |
| 192.9 | 1554.13 | HB | HB | HB | | HB | HB | |
| 192.8 | 1554.94 | HB | | | | | HB | |
| 192.7 | 1555.75 | HB | HB | HB | | HB | HB | |
| 192.6 | 1556.55 | HB | | | | | HB | |
| 192.5 | 1557.36 | HB | HB | | | HB | HB | |
| 192.4 | 1558.17 | HB | | | | | | |
| 192.3 | 1558.98 | HB | HB | | | | | |
| 192.2 | 1559.79 | HB | | | | | | |
| 192.1 | 1560.61 | HB | HB | | | | | |

Table 1 shows the nominal channel wavelengths output by the respective WCMs in WCS 420 for a WDM system 1 that uses up to thirty-two (32) channels. For a 2.5 Gb/s data rate, the third column lists the allocation between the low band LB and the high band HB for each of the thirty-two (32) channels generated by WCM1-32. The low band LB contains the first eight (8) channels, and the high band HB includes the next twenty-four (24) channels. Likewise, the fourth column shows the channel allocation for a sixteen (16) channel system with the four (4) channels designated at the low band LB and twelve (12) channels as the high band HB. As can be seen for the sixteen (16) channel allocation, and for the remaining preferred channel allocations in Table 1, the system implementations using less than thirty-two (32) channels have greater channel-to-channel spacing across the same overall bandwidth. As mentioned, the channel allocations in Table 1 illustrate a preferred selection for the channels within WDM system 1 and may be varied, both with respect to the individual channel wavelengths and the band for the channel wavelengths, as system requirements dictate. For example, if fiber amplifiers are used that have a rare-earth dopant other than erbium, or contain co-dopants in addition to erbium, the band of 1528-1562 nm may shift, spread, or shrink. Likewise, the actual fiber amplifiers employed may more efficiently support a different allocation of channels between low and high bands LB, HB to that shown representationally in Table 1. As well, WDM system 1 may be revised or upgraded to accommodate, for example, sixty-four (64) channels with 50 GHz spacing at 2.5 Gb/s or sixteen (16) channels with 100 GHz spacing at 10 Gb/s.

For the preferred thirty-two (32) channel system, each selected wavelength signal output from units WCM1-WCM8 is received by WM 430, and each selected wavelength signal output from WCM9-WCM32 is received by WM 440. WM 430 and WM 440 combine the received signals of the low band LB and the high band HB, respectively, into two wavelength division multiplexed signals. As shown in Fig. 3, WM 430 is an eight channel wavelength multiplexer, such as a conventional 1x8 planar optical splitter, and WM 440 is a twenty-four channel wavelength multiplexer, such as a conventional 1x32 planar optical splitter with eight unused ports. Each wavelength multiplexer may include a second port (e.g. 2x8 splitter and 2x32 splitter) for providing optical transmission system 1 with an optical monitoring channel (not shown). As well, WM 430 and 440 may have more inputs than is used by the system (e.g. 1x16 splitter and 1x64 splitter) to provide space for system growth. A wavelength multiplexer using passive silica-on-silicon ($SiO_2$-Si) or silica-on-silica ($SiO_2$-$SiO_2$) technology, for instance, can be made by one of ordinary skill in the art. Other technologies can also be used for WMs, e.g., for reducing insertion losses. Examples are AWG (Arrayed Waveguide Gratings), fiber gratings, and interferential filters.

The low band LB and high band HB output from multiplexing section 110 are received by TPA section 120. Naturally, the low band and high band signals may be provided to TPA section 120 from a source other than the OLTE 410, WCS 420, and WM 430 and 440 configuration depicted in Fig. 3. For example, the low band and high band signals may be generated and directly supplied to TPA section 120 by a customer without departing from the intent of the present invention described in more detail below.

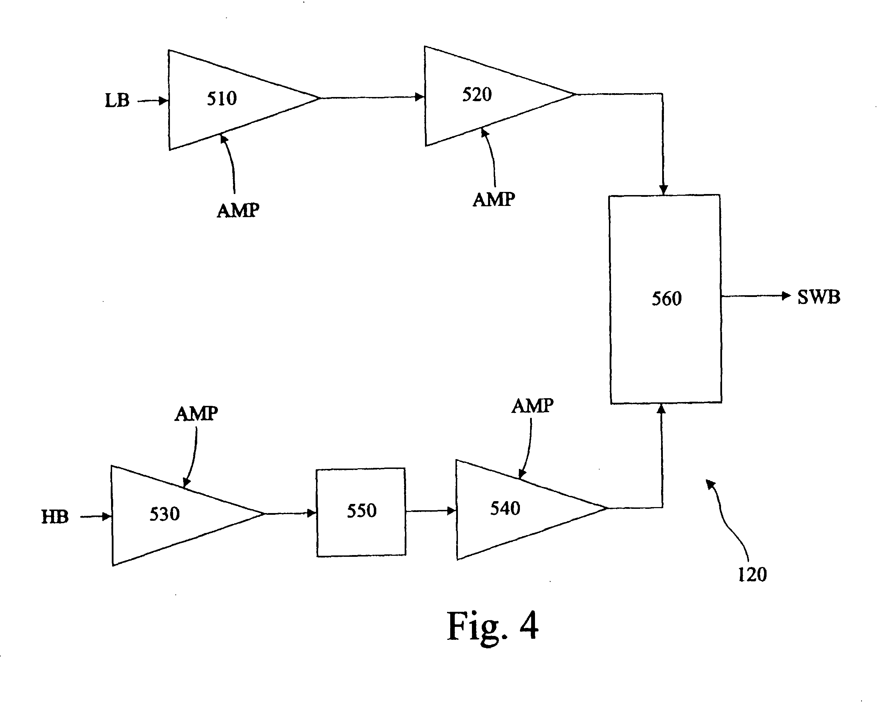

As shown in Fig. 4, TPA section 120 includes four amplifiers (AMP) 510, 520, 530, and 540, and filters 550 and 560. Amplifiers 510 and 520 are arranged in series and amplify the low band LB, likewise amplifier 530 and amplifier 540 are arranged in series and amplify the high band HB. The outputs of amplifiers 520 and 540 are received by filter 560, which combines the low band LB and the high band HB into a single wide-band (SWB).

Amplifiers 510, 520, 530, and 540 are preferably erbium-doped fiber amplifiers, although other rare-earth-doped fiber amplifiers may be used. Each of the amplifier 510, 520, 530, and 540 may be single-stage or multi-stage amplifiers as the particular design and system criteria warrant. Each amplifier is pumped, for example, by a laser diode to provide optical gain to the signals it amplifies. The characteristics of each amplifier, including its length and pump wavelength, are selected to optimize the performance of that amplifier for the particular sub-band that it amplifies. For example, with the preferred erbium-doped fiber amplifiers, amplifiers 510 and 530 are pumped with a laser diode (not shown) operating at 980 nm to amplify the low band LB and high band HB, respectively, in a linear or in a saturated regime. Appropriate laser diodes are available from the Applicant. The laser diodes may be coupled to the optical path of the amplifiers 510 and 530 using 980/1550 WDM couplers (not shown) commonly available on the market, for example model SWDM0915SPR from E-TEK DYNAMICS, INC., 1885 Lundy Ave., San Jose, CA (USA). The 980 nm laser diode provides a low noise figure for the amplifiers compared with other possible pump wavelengths.

The outputs of amplifiers 510 and 530 are received by amplifiers 520 and 540, respectively. Amplifiers 520 and 540 preferably operate as booster amplifiers in a saturated condition. Amplifier 520 amplifies the low band LB with another 980 nm pump (not shown) coupled to the optical path of the low band LB using a WDM coupler (not shown) described above. The 980 nm pump provides better gain behavior and noise figure for signals in the low band region that covers 1529-35 nm. Amplifier 540 amplifies the high band HB preferably with a laser diode pump source operating at 1480 nm. Such a laser diode is available on the market, such as model FOL1402PAX-1 supplied by JDS FITEL, INC., 570 Heston Drive, Nepean, Ontario (CA). The 1480 nm pump provides better saturated conversion efficiency behavior, which is needed in the high band for the greater number of channels in the region that covers 1542-61 nm. Alternatively, a higher power 980 nm pump laser or multiplexed 980 nm pump sources may be used.

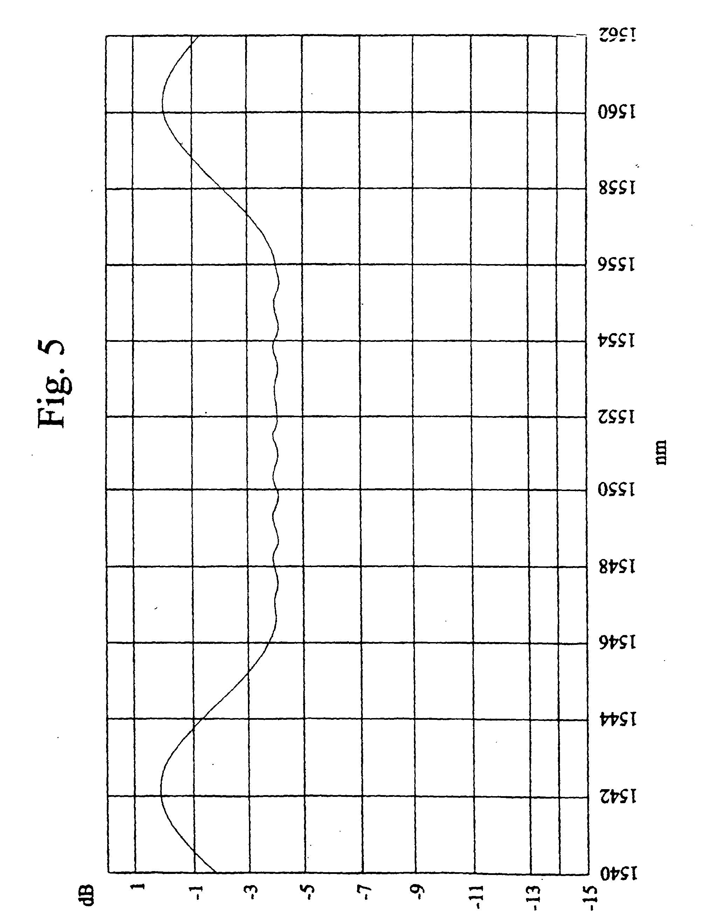

As shown in Fig. 4, TPA section 120 may include filter 550 within the high band amplifier chain for helping to equalize signal levels and SNRs at the system output across the high band HB. In the preferred embodiment, filter 550 is positioned between the two amplifier stages formed by AMP 530 and AMP 540 and comprises a de-emphasis filter that attenuates the wavelength regions of the high amplification within the high band. The de-emphasis filter, if used, may employ long period Bragg grating technology, split-beam Fourier filter, etc.. As an example, the de-emphasis filter may have an operating wavelength range of 1541-1561 nm and have wavelengths of peak transmission at 1541-1542 nm and 1559-1560 nm, with a lower, relatively constant transmission for the wavelengths between these peaks. Fig. 5 illustrates the filter shape or relative attenuation performance of a preferred de-emphasis filter 550. The graph of Fig. 5 shows that de-emphasis filter 550 has regions of peak transmission at around 1542 nm and 1560 nm, and a region of relatively constant or flat attenuation between about 1547 nm and 1556 nm. The de-emphasis filter 550 for erbium-doped fiber amplifiers need only have add an attenuation of about 3-4 dB at wavelengths between the peaks to help flatten the gain response across the high band. De-emphasis filter 550 may have an attenuation characteristic different from that depicted in Fig. 5 depending on the gain-flattening requirements of the actual system employed, such as the dopant used in the fiber amplifiers or the wavelength of the pump source for those amplifiers. As well, de-emphasis filter 550 may be positioned along the path of the high band at a location other than between AMP 530 and AMP 540 as desired.

After passing through the amplifiers of TPA 120, the amplified low band and high band output from amplifiers 520 and 540, respectively, are received by filter 560. Filter 560 may be, for example, an interferential low pass three-port filter, which combines the low band LB and high band HB into the single wide-band SWB and outputs it from one common port. Thus, filter 560 acts as a band combining filter. An optical monitor (not shown) and insertion for a service line, at a wavelength different from the communication channels, e.g. at 1480 nm, through a WDM 1480/1550 interferential filter (not shown) may also be added at the common port. The optical monitor detects optical signals to ensure that there is no break in optical transmission system 1. The service line insertion provides access for a line service module, which can manage through an optical supervisory channel the telemetry of alarms, surveillance, monitoring of performance and data, controls and housekeeping alarms, and voice frequency orderwire.

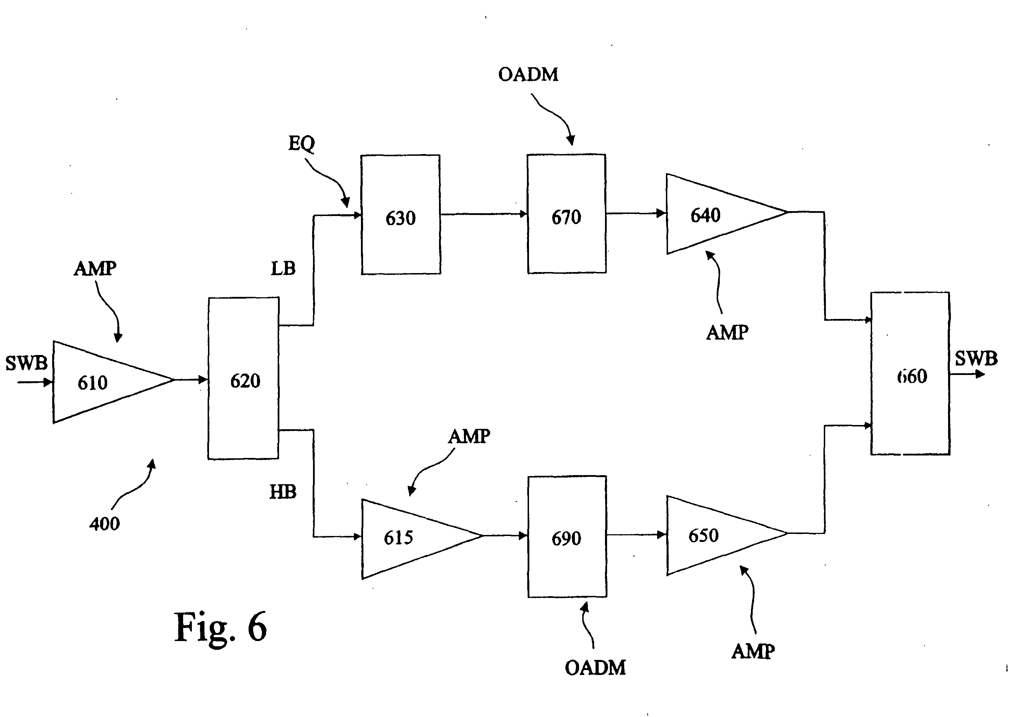

The single wide-band output from filter 560 of TPA section 120 passes through a length of transmission fiber (not shown), such as 100 kilometers, of optical fiber line 300, which attenuates the signals within the single wide-band SWB. Consequently, line site 400 receives and amplifies the signals within the single wide-band SWB. As shown in Fig. 6, line site 400 includes several amplifiers (AMP) 610, 615, 640, and 650, two filters 620 and 660, an equalizing filter (EQ) 630 and two OADM stages 670, 690. Amplifier 610 receives and amplifies the single wide-band SWB, whereas filter 620 receives the output from amplifier 610 and splits the single wide-band SWB into the low band LB and the high band HB components. The low band LB is equalized by equalizing filter 630, received by the first OADM stage 670 where predetermined signals are dropped and/or added, and further amplified by amplifier 640. At the same time, the high band HB, which has already passed through de-emphasis filter 550 in TPA 120, is first amplified by amplifiers 615, then received by the second OADM stage 690 where predetermined signals are dropped and/or added, and further amplified by amplifier 650. The amplified low band LB and high band HB are then recombined into the single wide-band SWB by filter 660.

Amplifier 610, which receives the single wide-band SWB, preferably comprises a single optical fiber amplifier that is operated in a linear regime. That is, amplifier 610 is operated in a condition where its output power is dependent on its input power. Depending on the actual implementation, amplifier 610 may alternatively be a multi-stage amplifier. By operating it in a linear condition, amplifier 610 helps to ensure relative power independence between the high band channels and the low band channels. In other words, with amplifier 610 operating in a linear condition, the output power (and signal-to-noise ratio) of individual channels in the one of the two sub-bands LB, HB does not vary significantly if channels in the other sub-band HB, LB are added or removed during operation of WDM system 1. To obtain robustness with respect to the presence of some or all of the channels in a dense WDM system, system 1 should operate with a first stage amplifier, such as amplifier 610, in an unsaturated regime in a line site 400 before extracting a portion of the channels for separate equalization and amplification. In a preferred embodiment, amplifier 610 is an erbium doped fiber amplifier that is pumped in a co-propagating direction with a laser diode (not shown) operating at 980 nm pump to obtain a noise figure preferably less than 5.5 dB for both low band LB and high band HB.

Filter 620 may comprise, for example, a three-port device having a drop port that feeds the low band LB into equalizing filter 630 and a reflection port that feeds the high band HB into amplifier 615. In this configuration, the filter 620 is preferably an interferential filter that passes or drops the low band LB to equalizing filter 630 with a high isolation of the high-wavelength part of the spectrum, and reflects the high band HB to amplifier 615 with a low isolation of the low-wavelength part of the spectrum. In particular, filter 620 preferably has a minimum isolation in the drop path for 1528 nm to 1536.5 nm of 25 dB and a minimum isolation in the reflection path for 1540.5 nm to 1565 nm of 10 dB. Also, the preferred filter has a maximum insertion loss in the reflection path for 1528 to 1536.5 nm of 0.7 dB and in the drop path for 1540.5 nm to 1565 nm of 1.5 dB. Other specifications for filter 620, of course, will depend on the particular channel wavelengths and amplifiers chosen for the WDM system 1.

Amplifier 615 is preferably a single erbium-doped fiber amplifier that is operated in saturation, such that its output power is substantially independent from its input power. In this way, amplifier 615 serves to add a power boost to the channels in the high band HB compared with the channels in the low band LB. Due to the greater number of channels in the high band HB compared with the low band LB in the preferred embodiment, i.e. twenty-four channels as opposed to eight, the high band channels typically will have had a lower gain when passing through the amplifiers for the single wide-band, such as amplifier 610. As a result, amplifier 615 helps to balance the power for the channels in the high band HB compared with the low band LB. Of course, for other arrangements of channels between the high and low bands HB, LB, amplifier 615 may not be required or may alternatively be required on the low band side of line site 400.

With respect to the high band of channels, amplifiers 610 and 615 may be viewed together as a two-stage amplifier with the first stage operated in a linear mode and the second stage operated in saturation. Relative stabilization of the output power between channels in the low band LB is generally not needed if, as in the presently described embodiment, the number of channels in the low band LB is limited to eight. This may change for systems having a higher number of channels in the low band LB. To help stabilize the output power between channels in the high bands, amplifier 610 and 615 are preferably pumped with the same laser diode pump source. In this manner, as described in EP695049, the residual pump power from amplifier 610 is provided to amplifier 615. Specifically, line site 400 includes a WDM coupler (not shown) positioned between amplifier 610 and filter 620 that extracts 980 nm pump light that remains at the output of amplifier 610. This WDM coupler may be, for example, model number SWDMCPR3PS110 supplied by E-TEK DYNAMICS, INC., 1885 Lundy Ave., San Jose, CA (USA). The output from this WDM coupler feeds into a second WDM coupler (not shown) of the same type and positioned in the optical path after amplifier 615. The two couplers are joined by an optical fiber 625 that transmits the residual 980 nm pump signal with relatively low loss. The second WDM coupler passes the residual 980 nm pump power into amplifier 615 in a counter-propagating direction.

From amplifier 615, high band signals are conveyed to OADM stage 690, which will be later described in details with reference to fig. 7, and then fed to amplifier 650.

For the preferred erbium-doped fiber amplifier, amplifier 650 has a pump wavelength of, for example, 1480 nm from a laser diode source (not shown) having a pump power in excess of the laser (not shown) that drives amplifiers 610 and 615. The 1480 nm wavelength provides good conversion efficiency for high output power output compared with other pump wavelengths for erbium-doped fibers. Alternatively, a high power 980 nm pump source or a group of multiplexed 980 nm pump sources could be used to drive amplifier 650. The amplifier 650 preferably operates in saturation to provide the power boost to the signals within the high band HB, and if desired, may comprise a multi-stage amplifier.

After passing through amplifier 610 and filter 620, the low band LB enters equalizing filter 630. As discussed above, the gain characteristic for the erbium-doped fiber spectral emission range has a peak or hump in the low band region, but remains fairly flat in the high band region. As a result, when the low band LB or the single wide-band SWB (which includes the low band LB) is amplified by an erbium-doped fiber amplifier, the channels in the low band region are amplified unequally. Also, as discussed above, when equalizing means have been applied to overcome this problem of unequal amplification, the equalizing has been applied across the entire spectrum of channels, resulting in continued gain disparities. However, by splitting the spectrum of channels into a low band LB and a high band HB, equalization in the reduced operating area of the low band LB can provide proper flattening of the gain characteristic for the channels of the low band LB.

In a preferred embodiment, the equalizing filter 630 comprises a two-port device based on long period chirped Bragg grating technology that gives selected attenuations at different wavelengths. For instance, equalizing filter 630 for the low band LB may have an operating wavelength range of 1529 nm to 1536 nm, with a wavelength at the bottom of the valley at between 1530.3 nm and 1530.7 nm. Equalizing filter 630 need not be used alone and may be combined in cascade with other filters (not shown) to provide an optimal filter shape, and thus, gain equalization for the particular amplifiers used in the WDM system 1. Equalizing filter 630 may be manufactured by one skilled in the art, or may be obtained from numerous suppliers in the field. It is to be understood that the particular structure used for the equalizing filter 630 is within the realm of the skilled artisan and may include, for instance, a specialized Bragg grating like a long period grating, an interferential filter, or Mach-Zehnder type optical filters.

From equalizing filter 630, low band signals are conveyed to OADM stage 670, which will be later described in details with reference to fig. 7, and then fed to amplifier 640.

With the preferred erbium-doped fiber amplifier, amplifier 640 has a pump wavelength of 980 nm, provided by a laser diode source (not shown) and coupled via a WDM coupler (not shown) to the optical path for pumping the amplifier 640 in a counter-propagating direction. Since the channels in the low band LB pass through both amplifier 610 and amplifier 640, equalizing filter 630 may compensate for the gain disparities caused by both amplifiers. Thus, the decibel drop for equalizing filter 630 should be determined according to the overall amplification and line power requirements for the low band LB. The amplifier 640 preferably operates in saturation to provide a power boost to the signals in the low band LB, and may comprise a multi-stage amplifier if desired.

After passing through amplifiers 640 and 650 respectively, the amplified low band LB and amplified high band HB are then recombined by filter 660 into the single wide-band SWB. Like filter 620, filter 660 may also be a low-pass three-port interferential filter. In addition, it is preferred to use filter 620 as a reflector for the low band LB and as a transmitter for the high band HB (i.e. high pass filter) and filter 660 in reverse (i.e. low pass filter) in order to achieve both negligible crosstalk between the bands and optimized output insertion losses for the high band HB. Like TPA section 120, line site 400 may also include an optical monitor and a service line insertion and extraction (not shown) through, e.g., a WDM 1480/1550 interferential filter (not shown). One or more of these elements may be included at any of the interconnection points of line site 400.

OADM stages 670, 690 have the function to extract "DROP channels" and/or to insert "ADD channels" within the low band LB and, respectively, within the high band HB. Owing to the asymmetrical band separation scheme described above, in which most of the pump power efficiency is dedicated to the high band HB, the low band LB can be conveniently dedicated to the function of Add/Drop up to 8 channels.

Fig. 7 shows an OADM module 695, configured so as to implement add and drop operations for up to four channels. This is not a limiting number, and modules with less or more than four add/drop channels may be made by the skilled in the art if required. Each OADM stage 670, 690 may comprise one or more OADM modules 695. In the preferred embodiment illustrated hereinbelow, OADM stage 670 includes two cascaded OADM modules to add/drop up to eight channels, while OADM stage 690 includes only one OADM module to add/drop up to 4 channels. If necessary, two or more OADM modules can be cascaded also in the high band path.

With reference to fig. 7, OADM module 695 comprises an input 671, an output 672, a power splitter 673, a power coupler 674, a line path 675, a drop path 676 and an add path 677.

In OADM stage 670, input 671 is optically coupled to the output of filter 630 or to the output 672 of a preceding OADM module, to receive an input signal including the low band channels. In OADM stage 690, the input 671 is optically coupled to the output of amplifier 615 or to the output 672 of a preceding OADM module, to receive an input signal including the high band channels. The input signal includes a group of channels that have to be dropped in the OADM module 695 (drop channels) and a remaining group of channels that have to pass through the OADM module 695 without being modified.

Power splitter 673 is a 1x2 splitter of the tapered fused optical fiber type, having a first input port optically coupled to the input 671 to receive the above mentioned input signal, a second input port (not shown), unused, and a first and a second output port. Power coupler 674 is a 2x1 coupler of the tapered fused optical fiber type, having a first and a second input port, a first output port optically coupled to the output 672 to feed to the output 672 an output signal including the group of added channels (low band channels for the OADM stage 670 and high band channels for the OADM stage 690) and a second output port (not shown), unused.

Line path 675 optically couples the first output port of power splitter 673 with the first input port of power coupler 674, while drop path 676 optically couples the second output port of power splitter 673 to a demultiplexer 680 and add path 677 optically couples a multiplexer 681 to the second input of power coupler 674.

An optical amplifier 684 can be provided downstream of multiplexer 681 to boost the power of the added signals.

Power splitter 673 has an unbalanced splitting ratio for feeding a main power fraction of the input signal into the line path 675 and a secondary power fraction of the input signal into the drop path 676. Preferably, the splitting ratio is between 60:40 (60% of input signal power into the line path and 40% into the drop path) and 90:10 (90% of input signal power into the line path and 10% into the drop path). In the non-limiting example of fig. 7, the splitting ratio is 60:40. The secondary power fraction defines a drop signal from which all but the drop channels have to be suppressed, whereas the main power fraction defines a pass-through signal from which only the drop channels have to be suppressed so that the other channels can be transmitted unmodified to output 672.

Power coupler 674 receives the pass-through signal at the first input port and an add signal at the second input port. Power coupler 674 has an unbalanced coupling ratio to couple into the first output port a power fraction of the pass-through signal greater than 50%. Preferably, the coupling ratio is between 60:40 (60% of optical power from the line path and 40% from the add path) and 90:10 (90% of optical power from the line path and 10% from the add path). In the non-limiting example of fig. 7, the coupling ratio is 90:10.

Splitting ratio and coupling ratio are conveniently chosen in the specified ranges so as to reach the best compromise between attenuation of undropped channels at OADM output 672, attenuation of dropped channels at demultiplexer 680 and attenuation of added channels at the OADM output 672. For example, it could be preferable to have a 90:10 coupling ratio in coupler 674, so as to have very low attenuation for the undropped channels, if add channel amplification by amplifier 684 is sufficient to compensate the 90% power loss in coupler 674.

In term of losses, a 60:40 splitting ratio corresponds to a 2.5 dB attenuation for the signal transmitted into the line path, while a 90:10 corresponds to an attenuation of about 0,5 dB. Corresponding attenuations are introduced by coupler 674 for signal transmission from line path 675 to output 672, and for signal transmission from add path 677 to output 672. For the undropped channels, splitting stage losses and coupling stage losses must be added, so that, for a 60:40 splitting ratio and a 90:10 coupling ratio, undropped channels undergo a 2,5 dB + 0,5 dB = 3 dB attenuation.

Having a low attenuation between the input and the output of an OADM module is also advantageous in terms of noise balance, as hereinafter shown.

In line sites 400, each of the amplifiers 610, 615, 640, 650 contributes in raising the noise level. A noise balance can be easily made in terms of noise figure (NF). The noise figure of an amplifier is a measure of how much noisy is the amplifier. In particular, the noise figure is defined as the ratio between the noise power at the output of the amplifier in the real case and the noise power at the output of the amplifier in an ideal case in which the amplifier doesn't introduce noise. It can be shown that $NF = 10 \log (S/N)_I/(S/N)_O$, where $(S/N)_I$ is the signal to noise ratio at the input of the amplifier and $(S/N)_O$ is the signal to noise ratio at the output of the amplifier.

In line sites 400, each OADM stage 670, 690 is positioned between two amplifiers. In particular, in the low band LB branch, OADM stage 670 is positioned between amplifier 610 and amplifier 640, while in the high band HB branch, OADM stage 690 is positioned between the amplifier 615 (serially coupled to amplifier 610) and amplifier 650. In the general case of two cascaded amplifiers A and B having respectives noise figures $NF_A$ and $NF_B$ and connected by a link having power attenuation (loss) L, it can be shown that the global noise figure $NF_{A+B}$ at the output of the second amplifier (B) is:

$$NF_{A+B} = NF_A + NF_B/(G_A-L) \tag{1}$$

where $G_A$ is the power gain of amplifier A. In the present case, attenuation L is approximately the attenuation of the OADM stage interposed between the two amplifiers. It is evident, from equation (1), that a decrease in attenuation L correspond to a decrease in the global noise figure $NF_{A+B}$.

A numerical example may help to better understand the advantages of having a low attenuation L value. Let us consider, for example, an amplifier 615 having a noise figure $NF_A$ of 6 dB, an amplifier 650 having a noise figure $NF_B$ of 8 dB and an OADM stage 690 whose attenuation is such as to have a link attenuation L of 7 dB (e.g. an OADM including a 3 dB splitter, a 3 dB coupler and having a 1 dB additional loss). If an amplifier 615 with a power gain $G_A$ of 13 dB is used, a $NF_{A+B}$ value of 7.5 dB is obtained. This value, if compared to the noise figure of amplifier 615 alone, shows that a 1.5 dB penalty has been introduced with respect to a single amplifier case. To decrease this noise penalty, if attenuation L cannot be modified by changes in the OADM stages (as in the case that OADM modules with 3 dB couplers and splitters are used), an amplifier 615 with higher gain has to be introduced. For example, if a more powerful amplifier 615 with a 20 dB gain is used, a $NF_{A+B}$ of 6.3 dB is obtained, that is 0.3 dB more than the noise figure of amplifier 615 alone. This noise penalty, even if not excessive for a single line site, could be troublesome in a long line system where many line sites are present. In fact, the noise penalty of each line site has to be multiplied for the number of line sites 400 in the system, and the global penalty could become unacceptably high. In particular, the above examples show that a 7 dB-loss OADM module introduces a loss that could be critical, in terms of noise, for a system with less than 20 dB gain amplifiers. The improvement in terms of noise balance obtained by lowering attenuation L is particularly important if low gain amplifiers are used that tend to cause, in accordance with the above, a relatively high global noise figure.

To better appreciate the importance of this improvement, let us consider again the above example of an amplifier 615 having a 13 dB gain. If the OADM stage attenuation is reduced (by choosing an OADM module with different splitting and/or coupling ratios) so as to have an attenuation L' lower than L, the noise figure is reduced. If an attenuation L' of 5 dB is present, a noise figure $NF_{A+B}$ of 7 dB is obtained, while if a link attenuation L' of 4 dB is present, a $NF_{A+B}$ of 6.7 dB is reached. Better results in terms of $NF_{A+B}$, are achievable if an amplifier 615 with higher gain is used. It is possible to optimize the system 1 in terms of noise performances by choosing an OADM module having splitting and coupling characteristics that better match with system requirements.

For each drop channel that has to be suppressed in the line path 675, a Bragg grating 678, whose Bragg wavelength corresponds to that of the drop channel, is inserted in the line path 675. Each grating 678 reflects light at the wavelength corresponding to its Bragg wavelength, i.e. it reflects the respective channel signal; thus the drop channel cannot propagate along the line and is reflected back at the input. An input isolator 679, preferably positioned between the input 671 and the power splitter 673, receives the DROP channels back-reflected by Bragg gratings 678 and suppresses them.

Due to reflection characteristics of Bragg gratings, each reflected channel can be surrounded by low intensity side-bands, which do not introduce worsening in system performances, being suppressed together with reflected channels by isolator 679. On the contrary, no side band is present in the transmitted channels band.

Alternatively, instead of the normally reflective Bragg gratings 678, blazed Bragg gratings can be used. While in normally reflective Bragg gratings the gratings elements extend in parallel planes normal to the waveguide axis, in blazed Bragg gratings the grating elements extend in parallel planes inclined at an oblique angle to the waveguide axis, so that their stop-bands are created by mode conversion of light propagating in the waveguide from the guided mode into an unguided -and hence radiating- mode or group of modes. Then, if blazed Bragg gratings are used, no isolator is needed to eliminate reflected channels.

Demultiplexer 680 has an input port optically coupled to the drop path 676 to receive the drop signal and demultiplexes the drop channels into a number of output ports connected to external users. Alternatively, demultiplexer 680 demultiplexes the drop signal into two or more paths, each of which is coupled to external demultiplexing stages. Demultiplexer 680 can be made, for example, by a daisy chain of interferential filters or by an AWG (Arrayed-Waveguide Grating) demultiplexer. Furthermore, examples of known demultiplexers include, for example, the device disclosed in EP 763,907 (an optical splitter having several outputs, each output being associated to a wavelength selective reflector reflecting one channel and to a splitter coupling the reflected channel to an output); or the device disclosed in the already cited US 5,457,760 (an optical splitter having N outputs followed by N output waveguides, each waveguide comprising a configuration of (N-1) Bragg gratings so as to transmit the wavelength band of the Bragg grating absent from configuration); or the device disclosed in US 5,475,780 (a splitter having a plurality of output waveguides, and wavelength selective means in each output waveguide to selectively transmit one passband, wherein the wavelength selective means comprises filters to at least partially exclude radiation in two stop bands of wavelengths respectively above and below the passband).

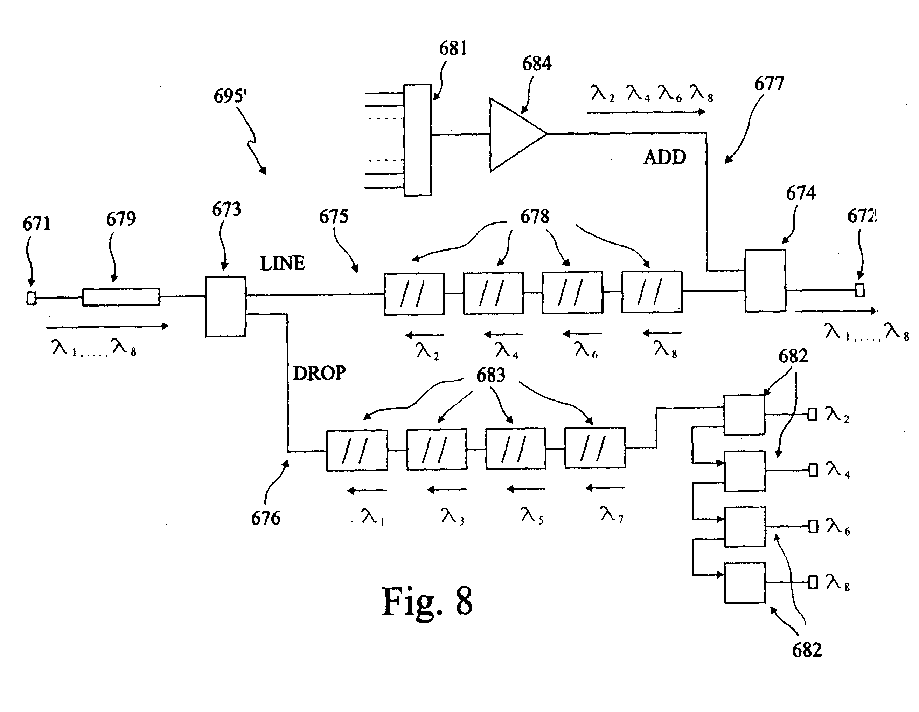

If a daisy chain of interferential filters is used and if the frequency separation between adjacent channels is such that resolving power of interferential filters is insufficient to distinguish the channels, a hybrid structure comprising Bragg gratings and interferential filters can be used, as shown in fig. 8. Here, an OADM module 695' is illustrated, which differs from OADM module 695 in the drop path structure. The other parts of the module are identical to those of OADM module 695, and are identified by the same reference numbers. In OADM module 695', the multiplexer comprises four cascaded interferential filters 682, each of which feeds a respective drop channel to a respective output port and sends to the next cascaded filter the remaining drop channels. Bragg gratings 683 (four in the present example) are cascaded along the drop path to receive the drop signal and selectively reflect back the neighboring channels of each drop channel, which are then suppressed by isolator 679. Consequently, interferential filters 682 receive double-spaced channels and may separate them without errors.

Alternatively, as in the case of Bragg gratings 678, blazed Bragg gratings can be used in place of the normally reflective Bragg gratings 683.

As an non-limiting example, let us consider the case in which OADM module 695' receives eight channels, identified by their wavelength $\lambda_1,..., \lambda_8$, and let us suppose that even channels $\lambda_2, \lambda_4, \lambda_6, \lambda_8$ define the drop channels. Both pass-through and drop signal then includes the eight channels $\lambda_1,..., \lambda_8$. Bragg gratings 678, positioned along the line path 675, reflect back even channels $\lambda_2, \lambda_4, \lambda_6, \lambda_8$, while Bragg gratings 683, positioned along the drop path 676, reflect back odd channels $\lambda_1, \lambda_3, \lambda_5, \lambda_7$. Reflected channels are all received by isolator 679, which eliminates them.

The first of interferential filters 682 receives drop channels $\lambda_2, \lambda_4, \lambda_6, \lambda_8$, extracts channel $\lambda_2$ and feeds channels $\lambda_4, \lambda_6, \lambda_8$ to the second interferential filter. The second of interferential filters 682 extracts channel $\lambda_4$ and feeds $\lambda_6, \lambda_8$ to the third of interferential filters 682. The third of interferential filters 682 in turn extracts channel $\lambda_6$ and feeds channel $\lambda_8$ to the last of interferential filters 682, where $\lambda_8$ is finally extracted.

According to figg. 7 and 8, multiplexer 681 has several inputs optically coupled to a same number of external users. Multiplexer 681 can be, for example, an optical power coupler, such as a fused fiber coupler or a planar optics coupler; as an alternative, multiplexer 681 can be a device of a type among those disclosed above with reference to demultiplexer 680. An Add/Drop Amplifier (ADA) 684 is interposed between multiplexer 681 and optical coupler 674, to boost the add channels and to equalize them with respect to the main line channels. ADA 684 is a 980 nm pumped, single stage amplifier.

In the above example, multiplexer 681, ADA 684 and coupler 674 co-operate to add to the pass-through signal, previously purged of the drop channels, add channels having the same wavelength as the drop channels $\lambda_2, \lambda_4, \lambda_6, \lambda_8$. In any OADM module, it is possible to add a number of channel different from the number of drop channels, provided no signal at the same wavelength as the add channel is already present in the pass-through signal.

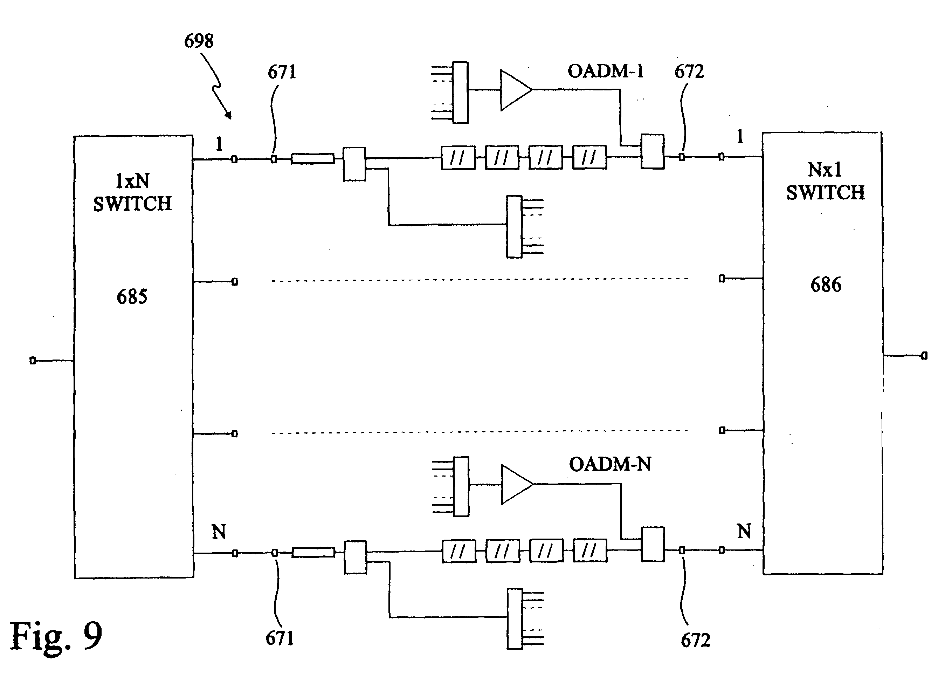

According to a different embodiment of the present invention, shown in fig. 9, OADM stages 670, 690 of fig. 6 may comprise an OADM unit 698 including N OADM modules (with N≥2) of the type hereinbefore described with reference to figg. 7 or 8, each of which has an input 671 optically coupled to a respective output port of a 1xN input optical switch 685 and output 672 optically coupled to a respective input port of a Nx1 output optical switch 686. In OADM stage 670, switch 685 and switch 686 are optically coupled to filter 630 and, respectively, to amplifier 640, while in OADM stage 690, switch 685 and switch 686 are optically coupled to amplifier 615 and, respectively, to amplifier 650.

In this manner, both low band LB and high band HB can be subdivided in sub-bands, each sub-band including channels that can be dropped and/or added by means of a respective OADM module selectable by means of switches 685, 686. Then, for example, OADM stage 670 may comprise an OADM unit including a 1x2 input switch and a 2x1 output switch, a first OADM module to add/drop channels $\lambda_1, \lambda_3, \lambda_5, \lambda_7$ and a second OADM module to add/drop channels $\lambda_2, \lambda_4, \lambda_6, \lambda_8$. Similarly, OADM stage 690 may comprise an OADM unit including several OADM modules, up to a maximum of eight if four channels OADM modules are used, or even more if OADM modules for less than four channels are used.

In details, input switch 685 receives the input signal and selects one of the N outputs depending on which channels have to be dropped/added. Similarly, output switch 686 selects the input port corresponding to the selected output port of input switch 685, so that the right OADM module is optically coupled to the optical line. Optical switches suitable for the present application are commonly available on the market, for example mechanical fiberoptic switches (MFSW) or programmable 1xN fiberoptic switch modules (PFSM) from E-TEK DYNAMICS, INC., 1885 Lundy Ave., San Jose, CA (USA).

To better illustrate OADM performances, some spectrum diagrams are added, showing both low band and high band channels behaviour.

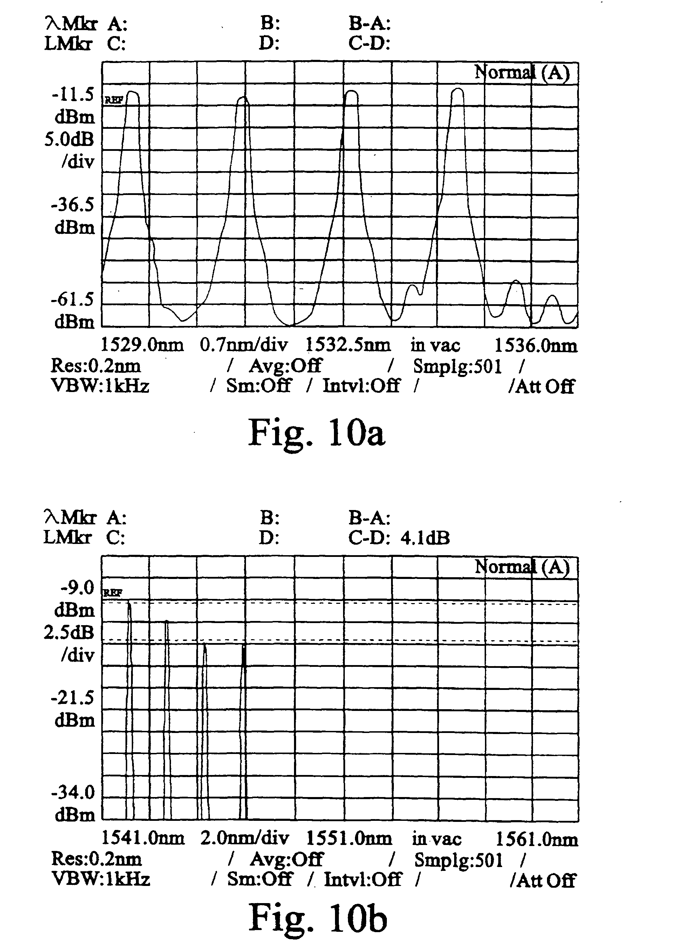

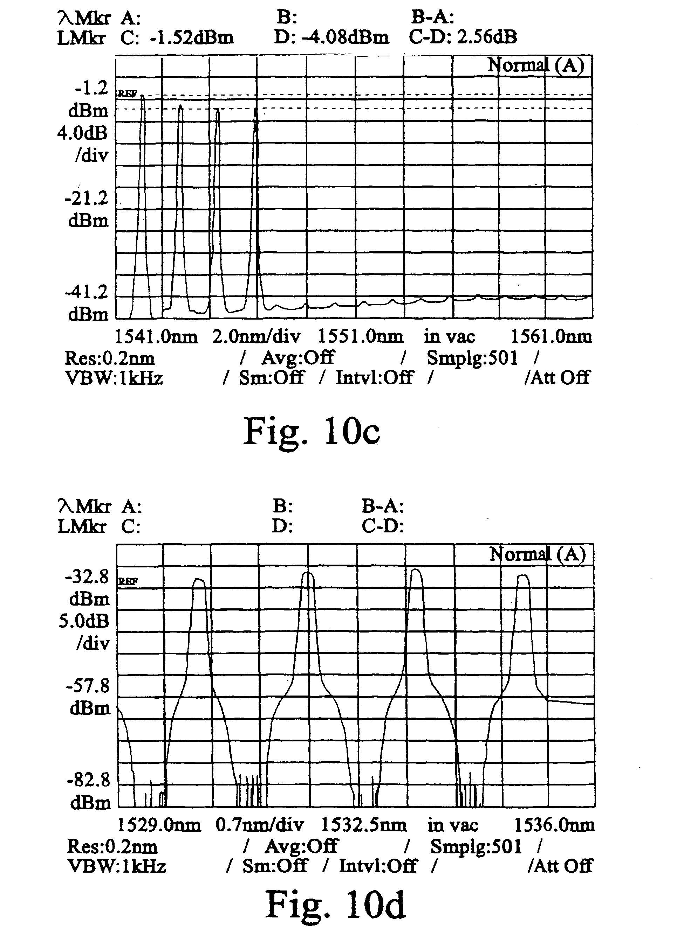

Figg. 10a and 10b show the output spectrum of multiplexer 681 of an OADM module operating in the low band (i.e. an OADM module of the OADM stage 670) and, respectively, in the high band (i.e. an OADM module of the OADM stage 690). In both cases, four (4) channels are added, represented by four peaks. Fig 10c shows the four added channels of fig. 10b after passage through ADA 684 in the high band case.

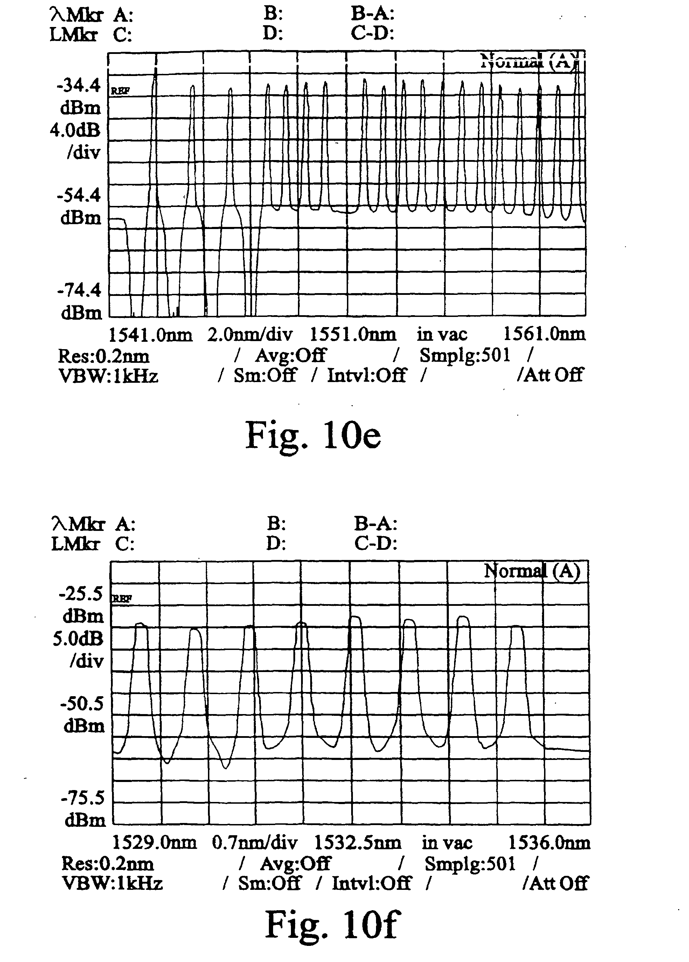

Figg. 10d and 10e show the output spectrum of an OADM module operating in the low band and, respectively, in the high band, when no channel has been added in the OADM module. in particular, in fig. 10d, only four of the eight low band channels are present (those of the pass-through signal), four holes being present in place of the absent channels. Similarly, in fig.10e, all but four of the twenty-four channels are present, four holes being present in place of the absent channels (visibles in the left side of the high band spectrum).

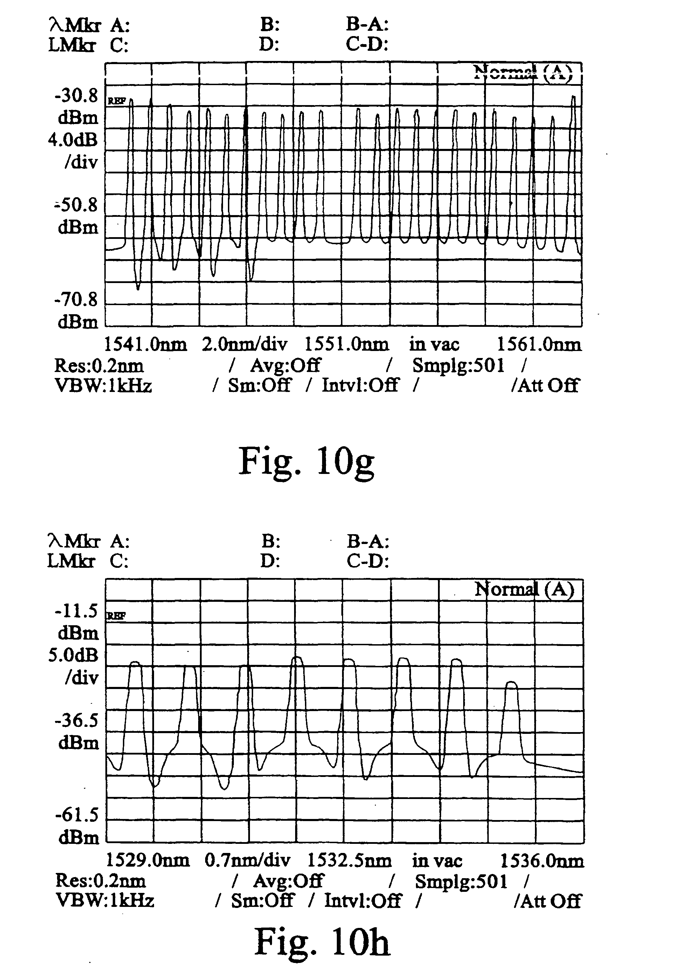

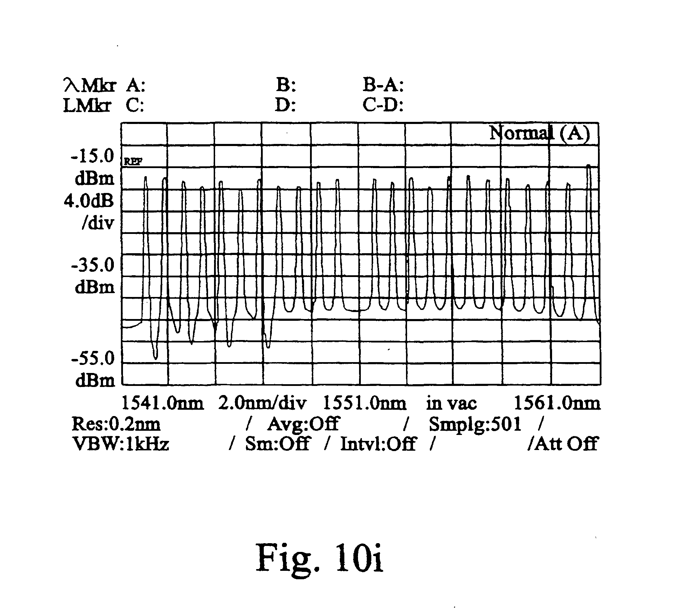

Figg. 10f and 10g show the output spectrum of an OADM module operating in the low band and, respectively, in the high band, when four channels have been added to the pass-through signal in the OADM module. In both figures, all the respective band channels (LB channels and HB channels) are present.

Figg. 10h and 10i show the output spectrum of an OADM module operating in the low band and, respectively, in the high band, after the passage through amplifier 640 and, respectively, 650.

Besides amplifiers 610, 615, 640, and 650, filters 620, 660 and 630 and OADM stages 670, 690, line site 400 may also include a dispersion compensating module (DCM) (not shown) for compensating for chromatic dispersion that may arise during transmission of the signals along the long-distance communication link.

The DCM (not shown) may also have several forms. For example, the DCM may have an optical circulator with a first port connected to receive the channels in either the high band or the low band. A chirped Bragg grating may be attached to a second port of the circulator. The channels will exit the second port and be reflected in the chirped Bragg grating to compensate for chromatic dispersion. The dispersion compensated signals will then exit a next port of the circulator for continued transmission in the WDM system. Other devices besides the chirped Bragg grating, such as a length of dispersion compensating fiber, may be used for compensating the chromatic dispersion. The design and use of the DCM section are not limiting the present invention and the DCM section may be employed or omitted in the WDM system 1 depending on overall requirements for system implementation.

After the line site 400, the combined single wide-band SWB signal passes through a length of long-distance optical transmission fiber of optical fiber line 300. If the length is sufficiently long to cause attenuation of the optical signals, i.e. 100 kilometers or more, one or more additional line sites 400 providing amplification may be used. In a preferred arrangement, five spans of long-distance transmission fiber are used and separated by four amplifying line site 400.

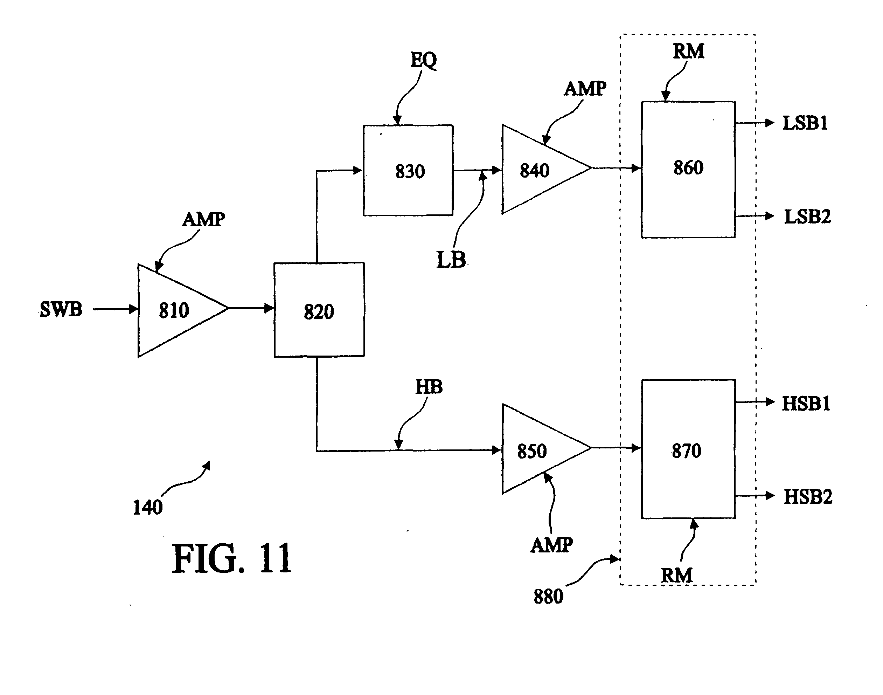

Following the final span of transmission fiber, RPA section 140 receives the single wide-band SWB from last line site 400 and prepares the signals of the single wide-band SWB for reception and detection at the end of the communication link. As shown in Fig. 11, RPA section 140 may include amplifiers (AMP) 810, 840, and 850, filter 820, and equalizing filter 830, and may further include if needed two router modules 860 and 870. Amplifier 810 comprises a rare-earth-doped fiber amplifier. This amplifier 810, which preferably is doped with erbium, amplifies the single wide-band SWB with, for example, a 980 nm pump or some other wavelength to provide a low noise figure for the amplifier, to help improve the signal-to-noise ratio for the channels in the single wide-band. The single wide-band SWB is in turn separated into the low band LB and high band HB by filter 820. In addition, the low band LB passes through equalizing filter 830.

As with TPA section 120 and line site 400, amplifier 840 amplifies the low band LB with, for example, a 980 nm pump, and amplifier 850 amplifies the high band HB with, for example, a 1480 nm pump. Of course, multiplexed 980 nm pump sources or a high power 980 nm pump can be used for driving the high band amplifier as well. Thus, amplifiers 810, 840, and 850, filter 820, and equalizing filter 830 perform the same functions as amplifiers 610, 640, and 650, filter 620, and equalizing filter 630, respectively, of line site 400 and may comprise the same or equivalent parts depending on overall system requirements.

Other structure may be added to RPA section 140 depending on the channel separation capability of demultiplexing section 150. If the channel separation capability of demultiplexing section 150 is for a relatively narrow channel spacing, e.g. a 100 GHz grid, then the optional channel separation structure 880 is typically not needed. However, if the channel separation capability of demultiplexing section 150 is for a relatively wide channel spacing (e.g. 200 GHz grid) while channels in WDM system 1 are densely spaced (e.g. 100 GHz), then RPA section 140 could include the optional structure 880 shown in Fig. 11. In particular, RPA section could have channel separation means, such as router modules 860 and 870.

Router modules 860 and 870 separate the low band LB and high band HB into two sub-bands, each sub-band consisting of half the channels of the band, e.g., with a 200 GHz separation between channels. For example, if the low band LB includes eight channels 1-8, each separated by 100 GHz, then router module 860 would split the low band LB into a first low sub-band LSB1 having channels $\lambda_1$, $\lambda_3$, $\lambda_5$, and $\lambda_7$, and a second low sub-band LSB2 having channels $\lambda_2$, $\lambda_4$, $\lambda_6$, and $\lambda_8$. Although each of the eight wavelengths in the low band LB would have a separation of 100 GHz, the router module 860 would separate the odd and even channels so that the channels in each low sub-band would have double the spacing, i.e. 200 GHz spacing. Router module 870 would split the high band HB into a first high sub-band HSB1 and a second high sub-band HSB2 in similar fashion.

Router modules 860, 870 may, for example, include a WDM coupler (not shown) that has a first series of Bragg gratings attached to a first port and a second series of gratings attached to a second port. The Bragg gratings attached to the first port would have reflection wavelengths that correspond to every other channel (i.e. the even channels), while the Bragg gratings attached to the second port would have reflection wavelengths that correspond to the remaining channels (i.e. the odd channels). This arrangement of gratings will also serve to split the single input path into two output paths with twice the channel-to-channel spacing.

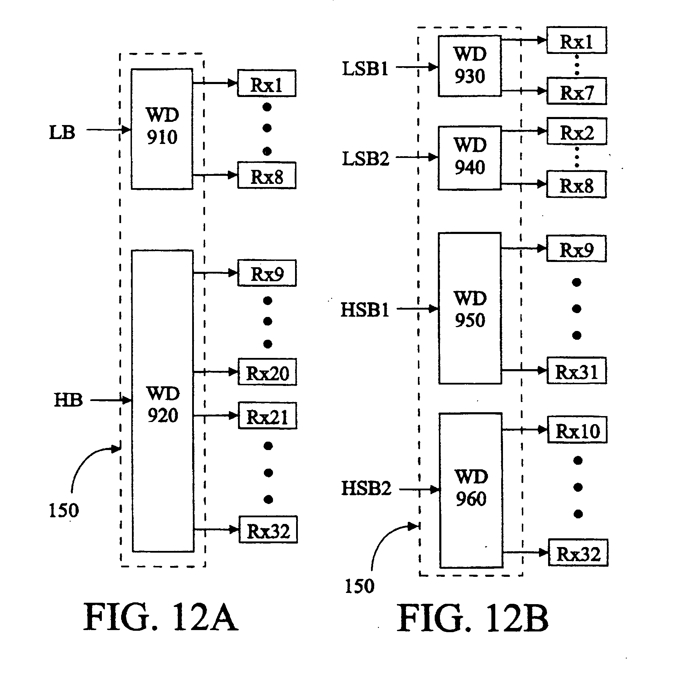

After passing through RPA section 140, the low band LB and high band HB or their respective sub-bands are received by demultiplexing section 150. As shown in Figs. 12A and 12B, the structure of demultiplexing section 150 depends on the separation capability of its demultiplexers.

Fig. 12A illustrates a preferred embodiment when the WDM system 100 uses a relatively narrow channel separation, e.g. 100 GHz separation. In this situation, demultiplexing section 150 uses a first wavelength demultiplexer (WD) 910 for the low band LB and a second wavelength demultiplexer (WD) 920 for the high band HB. Demultiplexing section 150 in Fig. 12A is connected to a plurality of receiving units Rx1-Rx32 for receiving each individual channel demultiplexed by WDs 910 and 920. The individual channels correspond to output channels 170, as shown in Fig. 2.

WD 910 in Fig. 12A receives the low band LB, which includes, for example, eight channels. The low band LB, with the channels spaced at 100 GHz intervals as shown in Table 1, is separated into its individual channels by WD 910, such as a 1x8 type arrayed waveguide grating (AWG) 100 GHz demultiplexer. Similarly, WD 920, such as a 1x24 type AWG 100 GHz demultiplexer, receives the high band HB, which includes, for example, twenty-four channels spaced at 100 GHz intervals, and separates the high HB band into its individual channels. AWG units may be obtained from various suppliers, including Hitachi and PIRI. Output channels 170 are composed of the individual channels produced by WD 910 and 920. Each channel of output channels 170 is received by a respective receiving unit Rx. Receiving units Rx1-Rx32 represent any kind of port, connection, detector or processing means that is coupled to receive a signal from a particular channel.

Fig. 12B illustrates a configuration for a WDM system 100 that has an alignment of channels such as 100 GHz spacing. This arrangement may be used in conjunction with router modules 860 and 870 that separate the low band LB and high band HB into two sub-bands each, such that each sub-band includes half the channels of the corresponding band with a 200 GHz separation between channels. In particular, demultiplexing section 150 in Fig. 12B includes four WDs 930, 940, 950, and 960, although depending on economic and commercial factors, demultiplexing section 150 could include one for each sub-band. Again, the wavelength demultiplexers preferably comprise arrayed waveguide grating devices, but alternate structures for achieving the same or similar wavelength separation are contemplated. For instance, one may use interferential filters, Fabry-Perot filters, or in-fiber Bragg gratings in a conventional manner to demultiplex the channels within the low band LB, the high band HB, the low sub-bands LSB1 and LSB2, and the high sub-bands HSB1 and HSB2. Like in Fig. 12A, demultiplexing section 150 also includes receiving units Rx1-Rx32 for receiving output channels 170.

In a preferred configuration, demultiplexer section 150 in Fig. 12B combines both interferential filter and AWG filter technology. In this manner, WDs 930 and 940, which are preferably four channel demultiplexers with interferential filters, receive and demultiplex first low sub-band LSB1 and second low sub-band LSB2, respectively. Specifically, WD 930 demultiplexes channels $\lambda_1$, $\lambda_3$, $\lambda_5$, and $\lambda_7$, and WD 940 demultiplexes channels $\lambda_2$, $\lambda_4$, $\lambda_6$, and $\lambda_8$. Similarly, WDs 950 and 960 receive and demultiplex first high sub-band HSB1 and second high sub-band HSB2, respectively, to produce channels $\lambda_9$-$\lambda_{32}$. Both WD 950 and WD 960, however, may be 1x16 type AWG 200 GHz demultiplexers that are underequipped to use only twelve of the available sixteen demultiplexer ports. Output channels 170 are composed of the individual channels demultiplexed by WDs 930, 940, 950, and 960, and each channel of output channels 170 is received by one of receiving units Rx1-Rx32.

An optical transmission system consistent with the present invention can therefore optimize the add/drop operations in a WDM system using of the entire erbium-doped fiber spectral emission range. The proposed technique of adding and dropping signals, which make use of unbalanced splitters and couplers in OADM, allows one to fix signal attenuations according to system characteristics, so as to avoid that signals passing through OADM stages undergo an excessive power loss. It is also possible to optimize the system in terms of noise performances by choosing the OADM modules that better match with system requirements and characteristics. The system optimization can be reached by using a same type of OADM module for all the line sites (choosing one of the types previously depicted with reference to figg. 7, 8 and 9, with the appropriate splitting and coupling ratios) or, differently, by choosing, in every line site and for every dropping and adding need, the OADM module whose characteristics are the most suitable. It is then possible to use, in a single line site, different types of OADM modules, or OADM modules of the same type having different splitting and/or coupling ratios.

System performances are further optimized by the use of Bragg gratings along the line path in OADM modules, having very narrow "holes" in the transmitted spectrum and no disturbance for the adjacent transmitted channels.

It will be apparent to those skilled in the art that various modifications and variations can be made to disclosed embodiments of the present invention. For example, while described in terms of a wavelength band consistent with erbium-doped fiber amplifiers, the present invention applies equally to the wavelength band for other rare-earth-doped fiber amplifiers and doping compositions as well and also to other pumping schemes and pumping conditions. Moreover, the system consistent with the present invention may include the separation of the single wide band into multiple sub-bands numbering greater than two. Other embodiments of the invention will be apparent to those skilled in the art from consideration of the specification and practice of the embodiments of the invention disclosed herein.

## Claims

1. Method for dropping optical channels from an optical line conveying a multi-channel optical signal, the method comprising:

   - receiving from the optical line an input signal including at least part of the channels of said multi-channel optical signal, said input signal including at least one drop channel to be extracted from the optical line;
   - splitting said input signal into a first optical power fraction defining a pass-through signal and at least a second optical power fraction defining a drop signal comprising said drop channel;
   - suppressing from said pass-through signal said at least one drop channel;
   - feeding to said optical line an output signal including at least a power fraction of said pass-through signal;

   **characterized in that** said first optical power fraction is greater than said second optical power fraction.

2. Method according to claim 1, wherein said first optical power fraction is between 60% and 90% of total optical power of said input signal.

3. Method according to claim 1 or 2, wherein the step of suppressing includes the step of retro-reflecting said at least one drop channel from said pass-through signal.

4. Method according to claim 3, wherein the step of suppressing further comprises the step of blocking said at least one retro-reflected drop channel.

5. Method according to one of claims 1-4, further comprising the step of coupling, with an unbalanced coupling ratio, said pass-through signal with an add signal to be inserted into the optical line obtaining said output signal; said output signal including a power fraction of said pass-through signal greater than 50%.

6. Method according to claim 5, wherein said power fraction of said pass-through signal within said output signal is between 60% and 90%.

7. Method according to one of claims 1-6, further comprising the step of demultiplexing said drop signal to extract from said drop signal said at least one drop channel.

8. Method according to claim 5 or 6, further comprising the step of multiplexing add channels to obtain said add signal.

9. Method according to claim 5, 6 or 8, further comprising the step of amplifying said add signal before coupling said add signal with said pass-through signal.

10. Method according to claims 7, further comprising the step of suppressing, from said drop signal, at least one channel other than said at least one drop channel, before demultiplexing said drop signal.

11. Method according to claim 10, wherein the step of suppressing, from said drop signal, at least one channel other than said at least one drop channel, includes the step of retro-reflecting said channels other than said at least one drop channel.

12. Method according to claim 11, wherein the step of suppressing, from said drop signal, at least one channel other than said at least one drop channel, further comprises the step of blocking said retro-reflected channels other than said at least one drop channel.

13. Method according to any one of claims 1 to 12, further comprising selectively switching said input signal into at least two optical add/drop paths in each of which said steps of receiving said input signal, splitting said input signal, suppressing from said pass-through signal said at least one drop channel and feeding to said optical line an output signal including at least part of said pass-through signal, are performed for a respective sub-band of said input signal.

14. Device for dropping optical channels in an optical transmission system, said optical transmission system (1) including an optical line (300) for conveying a multi-channel optical signal, the device (695; 695') comprising:

   - an input (671) optically coupled to said optical line (300) to receive from said optical line an input signal including at least one drop channel to be extracted from the optical line;
   - an output (672) optically coupled to said optical line (300) to feed to said optical line an output signal including at least part of the channels of said multi-channel optical signal;
   - an optical splitter (673), having an input port optically coupled to said input (671) and at least a first and a second output port, for feeding a first optical power fraction of said input signal, defining a pass-through signal, to said first output port, and a second optical power fraction of said input signal, defining at least one drop signal, to said at least one second output port;
   - a line optical path (675) optically coupling the first output port of said optical splitter (673) to said output (672);
   - at least one drop optical path (676) optically coupled to said at least a second output port of said optical splitter (673);
   - channel suppression means (678, 679), interposed between said input (671) and said output (672), for suppressing said at least one drop channel from said pass-through signal,

   **characterized in that** said optical splitter (673) has an unbalanced optical power splitting ratio, said first optical power fraction being greater than said second optical power fraction.

15. Device according to claim 14, wherein said first power fraction is between 60% and 90% of total optical power of said input signal.

16. Device according to claim 14 or 15, wherein said channel suppression means (678, 679) include wavelength-selective retro-reflecting means (678), positioned along said line optical path (675) between said optical splitter (673) and said output (672) and having at least one wavelength of maximum reflection corresponding to the wavelength of said at least one drop channel.

17. Device according to claim 16, wherein said wavelength-selective retro-reflecting means (678) include Bragg gratings.

18. Device according to claim 17, wherein said Bragg gratings (678) include back-reflective Bragg gratings.

19. Device according to claim 17, wherein said Bragg gratings (678) include blazed Bragg gratings.

20. Device according to one of claims 16-19, wherein said channel suppression means (678, 679) further include unidirectional transmitting means (679) interposed between said input (671) and said wavelength-selective retro-reflecting means (678) and so oriented to allow only transmission from said input (671) to said wavelength-selective retro-reflecting means (678).

21. Device according to claim 20, wherein said unidirectional transmitting means (679) includes an optical isolator.

22. Device according to one of claims 14-21, further comprising:

   - an add path (677), conveying an add signal to be inserted into the optical line;
   - an optical coupler (674) having a first input port optically coupled to said line optical path (675) to receive said pass-trough signal, a second input port optically coupled to said add path (677) to receive said add signal and an output port optically coupled to said output (672) to feed to said output (672) said output signal, and having an unbalanced optical power coupling ratio for feeding to said output said output signal including a power fraction of said pass-through signal greater than 50%.

23. Device according to claim 22, wherein said power fraction of said pass-through signal within said output signal is between 60% and 90%.

24. Device according to one of claims 14-23, further comprising at least one demultiplexer (680; 682) having an input port optically coupled to said at least one drop optical path (676) to receive said drop signal and at least one output port for the at least one drop channel.

**25.** Device according to claim 22 or 23, further comprising at least one multiplexer (681) having at least one input port to receive at least one add channel and an output port optically coupled to said add path (677) for feeding said add signal including said at least one add channel to said add path (677).

**26.** Device according to claim 25, further comprising an optical amplifier (684) positioned along said add path (677) to amplify said add signal.

**27.** Device according to one of claims 14 to 26, further comprising further wavelength-selective retro-reflecting means (683), positioned along said drop path (676) and having at least one wavelength of maximum reflection corresponding to the wavelength of at least one channel other than said at least one drop channel.

**28.** Device according to claim 27, wherein said further wavelength-selective retro-reflecting means (683) include Bragg gratings.

**29.** Device according to claim 28, wherein said Bragg gratings (683) include back-reflective Bragg gratings.

**30.** Device according to claim 28, wherein said Bragg gratings (683) include blazed Bragg gratings.

**31.** Device according to one of claims 14-30, wherein said optical splitter (673) includes a fused tapered optical splitter.

**32.** Device according to one of claims 14-30, wherein said optical splitter (673) includes a micro-optics splitter.

**33.** Device according to one of claims 22, 23, 25 and 26, wherein said.optical coupler (674) includes a fused tapered optical coupler.

**34.** Device according to one of claims 22, 23, 25 and 26, wherein said optical coupler (674) includes a micro-optics coupler.

**35.** Unit for dropping optical channels in an optical transmission system, said optical transmission system (1) including an optical line (300) for conveying a multi-channel optical signal, the unit (698) comprising:

- at least two devices for dropping optical channels in an optical transmission system, each of said devices dropping channels in a respective sub-band of said multi-channel optical signal;
- a first optical switch (685), having an input port optically coupled to the optical line (300) and at least two outputs ports each optically coupled to the input of a respective said device, said output ports being selectively optically coupled to said input port;
- a second optical switch (686), having at least two input ports each optically coupled to the output of a respective said device and an output port optically coupled to said optical line (300), said input ports being selectively optically coupled to said output port.

**characterized in that** said at least two devices for dropping optical channels in an optical transmission system are according to any one of claims 14-34.

**36.** Optical transmission system, comprising:

- an optical fiber line (300);
- a first terminal site (100) optically coupled to said optical fiber line (300), to transmit optical signals into said optical fiber line;
- a second terminal site (200) optically coupled to said optical fiber line (300), to receive optical signals from said optical fiber line;
- at least one line site (400) positioned along said optical fiber line (300) between said first and second terminal site (100, 200);

**characterized in that** said at least one line site (400) includes at least one device (695; 695') for dropping optical channels according to any one of claims 14 to 34.

**37.** Optical transmission system, comprising:

- an optical fiber line (300);
- a first terminal site (100) optically coupled to said optical fiber line (300), to transmit optical signals into said optical fiber line;
- a second terminal site (200) optically coupled to said optical fiber line (300), to receive optical signals from said optical fiber line;
- at least one line site (400) positioned along said optical fiber line (300) between said first and second terminal site (100, 200);

**characterized in that** said at least one line site (400) includes at least one unit (698) for dropping optical channels according to claim 35.

**Patentansprüche**

**1.** Verfahren zur Abzweigung von optischen Kanälen aus einer optischen Übertragungsleitung, die ein optisches Mehrkanalsignal überträgt, umfassend:

- Empfangen eines Eingangssignals von der optischen Übertragungsleitung, das mindestens einen Teil der Kanäle des optischen Mehrkanalsignals enthält, wobei das Eingangssignal mindestens einen Abzweigungskanal enthält, der von der optischen Übertragungsleitung abgezweigt werden soll;

- Aufteilen des Eingangssignals in einen ersten Anteil der optischen Leistung, der ein Durchgangssignal definiert, und mindestens einen zweiten Anteil der optischen Leistung, der ein Abzweigungssignal definiert, das den Abzweigungskanal enthält;

- Unterdrücken des mindestens einen Abzweigungskanals in dem Durchgangssignal;

- Einspeisen eines Ausgangssignals in die optische Übertragungsleitung, das mindestens einen Anteil der Leistung des Durchgangssignals enthält;

**dadurch gekennzeichnet, daß** der erste Anteil der optischen Leistung größer als der zweite Anteil der optischen Leistung ist.

**2.** Verfahren nach Anspruch 1, bei welchem der erste Anteil der optischen Leistung zwischen 60 % und 90 % der optischen Gesamtleistung des Eingangssignals beträgt.

**3.** Verfahren nach Anspruch 1 oder 2, bei welchem der Unterdrückungsschritt einen Schritt einschließt, in dem der mindestens eine Abzweigungskanal aus dem Durchgangssignal retro-reflektiert wird.

**4.** Verfahren nach Anspruch 3, bei welchem der Unterdrückungsschritt zusätzlich einen Schritt umfaßt, in dem der mindestens eine retro-reflektierte Abzweigungskanal gesperrt wird.

**5.** Verfahren nach einem der Ansprüche 1 bis 4, das zusätzlich einen Schritt umfaßt, in dem, bei unausgeglichenem Kopplungsverhältnis, das Durchgangssignal mit einem Additionssignal verknüpft wird, das in die optische Übertragungsleitung eingebracht werden soll, um das Ausgangssignal zu erhalten, wobei das Durchgangssignal einen Anteil von mehr als 50 % der Leistung des Ausgangssignals ausmacht.

**6.** Verfahren nach Anspruch 5, bei welchem der Anteil der Leistung des Durchgangssignals an dem Ausgangssignal zwischen 60 % und 90 % beträgt.

**7.** Verfahren nach einem der Ansprüche 1 bis 6, das zusätzlich einen Schritt umfaßt, in dem das Abzweigungssignal demultiplext wird, um den mindestens einen Abzweigungskanal aus dem Abzweigungssignal zu extrahieren.

**8.** Verfahren nach Anspruch 5 oder 6, das zusätzlich einen Schritt umfaßt, in dem Additionskanäle multiplext werden, um das Additionssignal zu erhalten.

9. Verfahren nach Anspruch 5,6 oder 8, das zusätzlich einen Schritt umfaßt, in dem das Additionssignal verstärkt wird, bevor es mit dem Durchgangssignal verknüpft wird.

10. Verfahren nach Anspruch 7, das zusätzlich einen Schritt umfaßt, in dem mindestens ein von dem mindestens einen Abzweigungskanal verschiedener Kanal in dem Abzweigungssignal unterdrückt wird, bevor das Abzweigungssignal demultiplext wird.

11. Verfahren nach Anspruch 10, bei welchem der Schritt, in welchem in dem Abzweigungssignal der mindestens eine von dem mindestens einen Abzweigungskanal verschiedene Kanal unterdrückt wird, einen Schritt umfaßt, in dem diese Kanäle, die von dem mindestens einen Abzweigungskanal verschieden sind, retro-reflektiert werden.

12. Verfahren nach Anspruch 11, bei welchem der Schritt, in welchem in dem Abzweigungssignal der mindestens eine von dem mindestens einen Abzweigungskanal verschiedene Kanal unterdrückt wird, zusätzlich einen Schritt umfaßt, bei dem die retro-reflektierten Kanäle, die von dem mindestens einen Abzweigungskanal verschieden sind, gesperrt werden.

13. Verfahren nach einem der Ansprüche 1 bis 12, bei welchem zusätzlich das Eingangssignal selektiv auf mindestens zwei optische Additions/Abzweigungspfade gegeben wird, in denen jeweils die Schritte des Empfangens des Eingangssignals, des Aufteilens des Eingangssignals, des Unterdrückens des mindestens einen Abzweigungskanals in dem Durchgangssignal und des Einspeisens eines Ausgangssignals in die optische Übertragungsleitung, das mindestens einen Teil des Durchgangssignals enthält, für ein Teilfrequenzband des Eingangssignals durchgeführt werden.

14. Vorrichtung zum Abzweigen optischer Kanäle in einem optischen Übertragungssystem, zu dem eine optische Übertragungsleitung (300) zum Übertragen eines optischen Mehrkanalsignals gehört, wobei die Vorrichtung (695,695') umfaßt:

- einen Eingang (671), der optisch an die optische Übertragungsleitung (300) angeschlossen ist, um von der optischen Übertragungsleitung ein Eingangssignal zu empfangen, das mindestens einen Abzweigungskanal enthält, der von der Übertragungsleitung abgezweigt werden soll;

- einen Ausgang (672), der optisch an die optische Übertragungsleitung (300) angeschlossen ist, um in die optische Übertragungsleitung ein Ausgangssignal einzuspeisen, das mindestens einen Teil der Kanäle des optischen Mehrkanalsignals enthält;

- einen optischen Verteiler (673), der einen optisch an den Eingang (671) angeschlossenen Eingangsanschluß und mindestens einen ersten und einen zweiten Ausgangsanschluß hat, zum Einspeisen eines ersten Anteils der optischen Leistung des Eingangssignals, der ein Durchgangssignal definiert, in den ersten Ausgangsanschluß und zum Einspeisen eines zweiten Anteils der optischen Leistung des Eingangssignals, der mindestens ein Abzweigungssignal definiert, in den mindestens einen zweiten Ausgangsanschluß;

- einen optischen Übertragungspfad (675), über den der erste Ausgangsanschluß des optischen Verteilers (673) optisch an den Ausgang (672) angeschlossen ist;

- mindestens einen optischen Abzweigungspfad (676), der optisch an den mindestens einen zweiten Ausgangsanschluß des optischen Verteilers (673) angeschlossen ist;

- Kanalunterdrückungsmittel (678,679), die zwischen dem Eingang (671) und dem Ausgang (672) angeordnet sind, zum Unterdrücken des mindestens einen Abzweigungskanals in dem Durchgangssignal,

**dadurch gekennzeichnet, daß** der optische Verteiler (673) die optische Leistung in einem unausgeglichenen Verhältnis aufteilt, wobei der erste Anteil der optischen Leistung größer ist als der zweite Anteil der optischen Leistung.

15. Vorrichtung nach Anspruch 14, bei welcher der erste Anteil der Leistung zwischen 60 und 90 % der optischen Gesamtleistung des Eingangssignals beträgt.

16. Vorrichtung nach Anspruch 14 oder 15, bei welcher die Kanalunterdrückungsmittel (678,679) wellenlängenselektive Retro-Reflexionsmittel (678) umfassen, die in dem des optischen Übertragungspfad (675) zwischen dem optischen Verteiler (673) und dem Ausgang (672) angeordnet sind und mindestens ein Reflexionsmaximum bei einer Wellenlänge haben, die der Wellenlänge des mindestens einen Abzweigungskanals entspricht.

17. Vorrichtung nach Anspruch 16, bei welcher die wellenlängenselektiven Retro-Reflexionsmittel (678) ein Bragg-Gitter umfassen.

18. Vorrichtung nach Anspruch 17, bei welcher das Bragg-Gitter (678) ein rückstrahlendes Bragg-Gitter ist.

19. Vorrichtung nach Anspruch 17, bei welcher das Bragg-Gitter (678) ein Blaze-Bragg-Gitter ist.

20. Vorrichtung nach einem der Ansprüche 16 bis 19, bei welcher die Kanalunterdrückungsmittel (678,679) zusätzlich unidirektionale Übertragungsmittel (679) einschließen, die zwischen dem Eingang (671) und den wellenlängenselektiven Retro-Reflexionsmitteln (678) angeordnet und so orientiert sind, daß nur Transmissionen von dem Eingang zu den wellenlängenselektiven Retro-Reflexionsmitteln (678) zugelassen sind.

21. Vorrichtung nach Anspruch 20, bei welcher die unidirektionalen Übertragungsmittel (679) einen optischen Isolator umfassen.

22. Vorrichtung nach einem der Ansprüche 14-21, zusätzlich umfassend:

   - einen Additionspfad (677), der ein Additionssignal befördert, daß in die optische Übertragungsleitung eingespeist werden soll;

   - einen Optokoppler (674), der einen optisch an den optischen Leitungspfad (675) angeschlossenen ersten Eingangsanschluß zum Empfangen des Durchgangssignals, einen optisch an den Additionspfad (676) angeschlossenen zweiten Eingangsanschluß, zum Empfangen des Additionssignals und einen optisch an den Ausgang (672) angeschlossenen Ausgangsanschluß zum Einspeisen des Ausgangssignals in den Ausgang (672) hat, wobei der Optokoppler das Ausgangssignal in den Ausgang mit einem unausgeglichenen Kopplungsverhältnis der optischen Leistungen einspeist und das Durchgangssignal einen Anteil von mehr als 50 % der Leistung des Ausgangssignals ausmacht.

23. Vorrichtung nach Anspruch 22, bei welcher der Anteil der Leistung des Durchgangssignals an dem Ausgangssignal zwischen 60 % und 90 % beträgt.

24. Vorrichtung nach einem der Ansprüche 14 bis 23, die zusätzlich mindestens einen Demultiplexer (680,682) umfaßt, der einen optisch an den mindestens einen optischen Abzweigungspfad (676) angeschlossenen Eingangsanschluß zum Empfang des Abzweigungssignals und mindestens einen Ausgangsanschluß für den mindestens einen Abzweigungskanal hat.

25. Vorrichtung nach Anspruch 22 oder 23, die zusätzlich mindestens einen Multiplexer (681) umfaßt, der mindestens einen Eingangsanschluß zum Empfangen des mindestens einen Additionskanals und einen Ausgangsanschluß hat, der optisch an den Additionspfad (677) angeschlossen ist, um das Additionssignal in den Additionspfad (677) einzuspeisen, das den mindestens einen Additionskanal enthält.

26. Vorrichtung nach Anspruch 25, die zusätzlich einen optischen Verstärker (684) zum Verstärken des Additionssignals umfaßt, der in dem Additionspfad (677) angeordnet ist.

27. Vorrichtung nach einem der Ansprüche 14 bis 26, die zusätzlich weitere wellenlängenselektive Retro-Reflexionsmittel (683) umfaßt, die in dem Abzweigungspfad (676) angeordnet sind und mindestens ein Reflexionsmaximum bei einer Wellenlänge haben, die der Wellenlänge mindestens eines von dem Abzweigungskanal verschiedenen Kanals entspricht.

28. Vorrichtung nach Anspruch 27, bei welcher die weiteren wellenlängenselektiven Retro-Reflexionsmittel (683) ein Bragg-Gitter umfassen.

29. Vorrichtung nach Anspruch 28, bei welcher das Bragg-Gitter (683) ein rückstrahlendes Bragg-Gitter ist.

**30.** Vorrichtung nach Anspruch 28, bei welcher das Bragg-Gitter (683) ein Blaze-Bragg-Gitter ist.

**31.** Vorrichtung nach einem der Ansprüche 14 bis 30, bei welcher der optische Verteiler (673) ein abgesicherter, getaperter optischer Verteiler ist.

**32.** Vorrichtung nach einem der Ansprüche 14 bis 30, bei welcher der optische Verteiler (673) ein mikrooptischer Verteiler ist.

**33.** Vorrichtung nach einem der Ansprüche 22,23,25 und 26, bei welcher der Optokoppler (674) ein abgesicherter, getaperter Optokoppler ist.

**34.** Vorrichtung nach einem der Ansprüche 22,23,25 und 26, bei welcher der Optokoppler (674) ein Mikro-Optokoppler ist.

**35.** Baugruppe zum Abzweigen optischer Kanäle in einem optischen Übertragungssystem (1), zu dem eine optische Übertragungsleitung (300) zum Übertragen eines optischen Mehrkanalsignals gehört, wobei die Baugruppe (698) umfaßt:

- mindestens zwei Vorrichtungen zum Abzweigen optischer Kanäle in einem optischen Übertragungssystem, wobei jede der Vorrichtungen Kanäle in ein Teilfrequenzband des optischen Mehrkanalsignals abzweigt,

- einen ersten optischen Schalter (685), der einen optisch an die optische Übertragungsleitung (300) angeschlossenen Eingangsanschluß und mindestens zwei Ausgangsanschlüsse hat, die jeweils optisch an den Eingang einer der beiden Vorrichtungen angeschlossen sind, wobei die Ausgangsanschlüsse selektiv optisch mit dem Eingangsanschluß gekoppelt sind,

- ein zweiter optischer Schalter (686), der mindestens zwei jeweils optisch mit dem Ausgang einer der Vorrichtungen gekoppelte Eingangsanschlüsse und einen Ausgangsanschluß hat, der optisch an die optische Übertragungsleitung (300) angeschlossen ist, wobei die Eingangsanschlüsse selektiv optisch mit dem Ausgangsanschluß gekoppelt sind,

**dadurch gekennzeichnet, daß** mindestens eine der beiden Vorrichtungen zum Abzweigen optischer Kanäle in einem optischen Übertragungssystem nach einem der Ansprüche 14 bis 34 ausgebildet ist.

**36.** Optisches Übertragungssystem umfassend:

- eine faser-optische Übertragungsleitung (300),

- ein erstes Endgerät (100), das optisch an die faser-optische Übertragungsleitung (300) angeschlossen ist, zum Einspeisen optischer Signale in die faser-optische Übertragungsleitung,

- ein zweites Endgerät (200), das optisch an die faser-optische Übertragungsleitung (300) angeschlossen ist, zum Empfangen optischer Signale von der faser-optischen Übertragungsleitung,

- mindestens einer Zwischenstation (400), die in der faser-optischen Übertragungsleitung (300) zwischen dem ersten und dem zweiten Endgerät (100,200) angeordnet ist,

**dadurch gekennzeichnet, daß** die wenigstens eine Zwischenstation (400) mindestens eine Vorrichtung (695,695') zum Abzweigen optischer Kanäle nach einem der Ansprüche 14 bis 34 umfaßt.

**37.** Optisches Übertragungssystem umfassend

- eine faser-optische Übertragungsleitung (300),

- ein erstes Endgerät (100), das optisch an die faser-optische Übertragungsleitung (300) angeschlossen ist, zum Einspeisen optischer Signale in die faser-optische Übertragungsleitung;

- ein zweites Endgerät (200), das optisch an die faser-optische Übertragungsleitung (300) angeschlossen ist, zum Empfangen optischer Signale von der faser-optischen Übertragungsleitung;

- mindestens einer Zwischenstation (400), die in der faser-optischen Übertragungsleitung (300) zwischen dem ersten und dem zweiten Anschlußgerät (100,200) angeordnet ist,

**dadurch gekennzeichnet, daß** die mindestens eine Zwischenstation (400) mindestens eine Baugruppe (698) zum Abzweigen optischer Kanäle nach Anspruch 35 umfaßt.

## Revendications

1. Procédé de dérivation de canaux optiques depuis une ligne optique transportant un signal optique multi-canal, le procédé comprenant les étapes suivantes :

   - réception depuis la ligne optique d'un signal d'entrée comprenant au moins une partie des canaux dudit signal optique multi-canal, ce signal d'entrée comprenant au moins un canal de dérivation à extraire de la ligne optique ;
   - répartition dudit signal d'entrée en une première fraction de puissance optique définissant un signal de transmission et au moins une seconde fraction de puissance optique définissant un signal de dérivation comprenant ledit canal de dérivation ;
   - suppression dans ledit signal de transmission dudit au moins un canal de dérivation ;
   - alimentation de la ligne optique avec un signal de sortie comprenant au moins une fraction de puissance dudit signal de transmission ;

   **caractérisé en ce que** ladite première fraction de puissance optique est supérieure à ladite seconde fraction de puissance optique.

2. Procédé selon la revendication 1, dans lequel la première fraction de puissance optique est comprise entre 60% et 90% de la puissance optique totale du signal d'entrée.

3. Procédé selon la revendication 1 ou 2, dans lequel l'étape de suppression comprend une étape de retro-reflexion dudit au moins un canal de dérivation depuis le signal de transmission.

4. Procédé selon la revendication 3, dans lequel l'étape de suppression comprend en outre l'étape de blocage dudit au moins un canal de dérivation rétro-réfléchi.

5. Procédé selon l'une des revendications 1 à 4, comprenant en outre, pour l'obtention dudit signal de sortie, une étape de couplage, avec un rapport de couplage déséquilibré, dudit signal de transmission avec un signal d'appoint à insérer dans la ligne optique ; ce signal de sortie comprenant une fraction de puissance dudit signal de transmission supérieure à 50%.

6. Procédé selon la revendication 5, dans lequel la fraction de puissance du signal de transmission au sein du signal de sortie est comprise entre 60% et 70%.

7. Procédé selon l'une quelconque des revendications 1 à 6, comprenant en outre l'étape de démultiplexage du signal de dérivation de façon à extraire de ce signal de dérivation ledit au moins un canal de dérivation.

8. Procédé selon la revendication 5 ou 6, comprenant en outre l'étape de multiplexage des canaux d'appoint de façon à obtenir ledit signal d'appoint.

9. Procédé selon la revendication 5, 6 ou 8, comprenant en outre l'étape d'amplification du signal d'appoint avant couplage de ce signal d'appoint avec le signal de transmission.

10. Procédé selon la revendication 7, comprenant en outre, avant l'étape de démultiplexage dudit signal de dérivation, une étape de suppression dans le signal de dérivation d'au moins un canal autre que ledit au moins un canal de dérivation.

11. Procédé selon la revendication 10, dans lequel l'étape de suppression, dans le signal de dérivation, d'au moins un canal autre que ledit au moins un canal de dérivation, comprend l'étape de retro-reflexion des canaux autres que ledit au moins un canal de dérivation.

**12.** Procédé selon la revendication 11, dans lequel l'étape de suppression, dans le signal de dérivation, d'au moins un canal autre que ledit au moins un canal de dérivation, comprend en outre une étape de blocage desdits canaux réfléchis autre que ledit au moins un canal de dérivation.

**13.** Procédé selon l'une quelconque des revendications 1 à 12, comprenant en outre une commutation sélective du signal d'entrée dans au moins deux chemins optiques d'appoint/dérivation dans chacun desquels lesdites étapes de réception du signal d'entrée, de répartition du signal d'entrée, de suppression dans le signal de transmission dudit au moins un canal de dérivation, et d'alimentation de la ligne optique avec un signal de sortie comprenant au moins une partie dudit signal de transmission, sont effectués pour une sous-bande respective du signal d'entrée.

**14.** Dispositif de dérivation de canaux optique dans un système de transmission optique, ce système de transmission optique (1) comprenant une ligne optique (300) pour transporter un signal optique multi-canal, le dispositif (695 ; 695') comprenant :

- une entrée (671) couplée de façon optique à la dite ligne optique (300) pour recevoir depuis la ligne optique un signal d'entrée comprenant au moins un canal de dérivation à extraire de la ligne optique ;
- une sortie (672) couplée de façon optique à ladite ligne optique (300) pour alimenter ladite ligne optique d'un signal de sortie comprenant au moins une partie des canaux du signal optique multi-canal ;
- un répartiteur optique (673), ayant un port d'entrée couplé de façon optique à ladite entrée (671) et au moins un premier et un second port de sortie pour alimenter ledit premier port de sortie d'une première fraction de puissance optique du signal d'entrée définissant un signal de transmission, et alimenter au moins ledit second port de sortie avec une seconde fraction de puissance optique du signal d'entrée, définissant au moins un signal de dérivation ;
- un chemin optique linéaire (675) couplant de façon optique le premier port de sortie du répartiteur optique (673) avec ladite sortie (672) ;
- au moins un chemin optique de dérivation (676) couplée de façon optique avec ledit au moins un second port de sortie du répartiteur optique (673) ;
- des moyens de suppression de canal (678, 679), interposés entre ladite entrée (671) et ladite sortie (672), pour supprimer ledit au moins un canal de dérivation depuis le signal de transmission,

   **caractérisé en ce que** le répartiteur optique (673) présente un rapport de répartition de puissance optique déséquilibré, la première fraction de puissance optique étant supérieure à la seconde fraction de puissance optique.

**15.** Dispositif selon la revendication 14, dans lequel ladite première fraction de puissance est comprise entre 60% et 90% de la puissance optique totale du signal d'entrée.

**16.** Dispositif selon la revendication 14 ou 15, dans lequel les moyens de suppression de canal (678, 679) comprennent des moyens rétro-réfléchissants sélectifs en longueur d'onde (678), positionnés le long du chemin optique linéaire, (675) entre le répartiteur optique (673) et ladite sortie (672) et ayant au moins une longueur d'onde de réflexion maximum correspondant à la longueur d'onde dudit au moins un canal de dérivation.

**17.** Dispositif selon la revendication 16, dans lequel les moyens rétro-réfléchissants sélectifs en longueur d'onde (678) comprennent des réseaux de Bragg.

**18.** Dispositif selon la revendication 17, dans lequel les réseaux de Bragg (678) comprennent des réseaux de Bragg réfléchissants.

**19.** Dispositif selon la revendication 17, dans lequel les réseaux de Bragg (678) comprennent des réseaux de Bragg blazés.

**20.** Dispositif selon l'une des revendications 16 à 19, dans lequel les moyens de suppression de canal (678, 679) comprennent en outre des moyens de transmission unidirectionnelle (679) interposés entre ladite entrée (671) et les moyens rétro-réfléchissants sélectifs en longueur d'onde (678) et orientés de façon à permettre seulement une transmission depuis ladite entrée (671) vers les moyens rétro-réfléchissants sélectifs en longueur d'onde (678).

**21.** Dispositif selon la revendication 20, dans lequel les moyens de transmission unidirectionnelle (679) comprennent un affaiblisseur non réciproque.

**22.** Dispositif selon l'une des revendications 14 à 21, comprenant en outre :

- un chemin d'appoint (677), transportant un signal d'appoint à insérer dans la ligne optique ;
- un coupleur optique (673, 674) ayant un premier port d'entrée couplé de façon optique auxdits chemins optiques linéaires (675) de façon à recevoir ledit signal de transmission, un second port d'entrée couplé de façon optique auxdits chemins d'appoint (677) de façon à recevoir le signal d'appoint, et un port de sortie couplée de façon optique à ladite sortie (672) pour alimenter ladite sortie (672) avec ledit signal de sortie, et le coupleur optique ayant un rapport de couplage de puissance optique déséquilibré de façon à alimenter ladite sortie avec ledit signal de sortie comprenant une fraction de puissance dudit signal de transmission supérieur à 50%.

**23.** Dispositif selon la revendication 22, dans lequel la fraction de puissance dudit signal de transmission au sein du signal de sortie est comprise entre 60% et 90%.

**24.** Dispositif selon l'une des revendications 14 à 23, comprenant en outre au moins un démultiplexeurs (680 ; 682) ayant un port d'entrée couplé de façon optique auxdits au moins un chemin optique de dérivation (676) de façon à recevoir ledit signal de dérivation et au moins un port de sortie pour ledit au moins un canal de dérivation.

**25.** Dispositif selon la revendication 22 ou 23, comprenant en outre au moins un multiplexeur (681) ayant au moins un port d'entrée pour recevoir au moins un canal d'appoint et un port de sortie couplée de façon optique auxdits chemins d'appoint (677) avec ledit façon à alimenter ledit chemin d'appoint (677) du signal d'appoint doté dudit au moins un canal d'appoint.

**26.** Dispositif selon la revendication 25, comprenant en outre un amplificateur optique (684) positionné le long du chemin d'appoint (677) de façon à amplifier ledit signal d'appoint.

**27.** Dispositif selon l'une des revendications 14 à 26, comprenant en outre des moyens rétro-réfléchissants sélectifs en longueur d'onde (683), positionnés le long dudit chemin de dérivation (676) et ayant au moins une longueur d'onde de réflexion maximum correspondant à la longueur d'onde d'au moins un canal autre que ledit au moins un canal de dérivation.

**28.** Dispositif selon la revendication 27, dans lequel les moyens rétro-réfléchissants sélectifs en longueur d'onde. (683) comprennent des réseaux de Bragg.

**29.** Dispositif selon la revendication 28, dans lequel les réseaux de Bragg (683) comprennent des réseaux de Bragg réfléchissants.

**30.** Dispositif selon la revendication 28, dans lequel les réseaux de Bragg (683) comprennent des réseaux de Bragg blazés.

**31.** Dispositif selon l'une des revendications 14 à 30, dans lequel le répartiteur optique (673) comprend un répartiteur optique réalisé par fusion et effilage.

**32.** Dispositif selon l'une des revendications 14 à 30, dans lequel le répartiteur optique (673) comprend un répartiteur micro-optique.

**33.** Dispositif selon l'une des revendications 22, 23, 25 et 26, dans lequel le coupleur optique (674) comprend un coupleur optique réalisé par fusion et effilage.

**34.** Dispositif selon l'une des revendications 22, 23, 25 et 26, dans lequel le coupleur optique (674) comprend un coupleur micro optique.

**35.** Unité de dérivation de canaux optiques dans un système de transmission optique, ce système (1) de transmission optique comprenant une ligne optique (300) pour transporter un signal optique multi-canal, l'unité (698) comprenant :

- au moins deux dispositifs de dérivation de canaux optiques dans un système de transmission optique ; chacun des dispositifs dérivant des canaux dans une sous-bande respective dudit signal optique multi-canal ;
- un premier commutateur optique (685), ayant un port d'entrée couplé de façon optique à ladite ligne optique (300) et au moins deux ports de sortie chacun couplé de façon optique à l'entrée d'un dispositif respectif, lesdits ports de sortie étant sélectivement couplés de façon optique audit port d'entrée ;
- un second commutateur optique (686), ayant au moins deux ports d'entrée chacun couplé de façon optique à la sortie d'un dispositif respectif et un port de sortie couplé de façon optique à ladite ligne optique (300), lesdits ports d'entrée étant sélectivement couplés de façon optique audit port de sortie,

   **caractérisé en ce que** lesdits au moins deux dispositifs de dérivation de canaux optique dans un système de transmission optique sont selon l'une quelconque des revendications 14 à 34.

**36.** Système de transmission optique comprenant :

- une ligne de fibre optique (300) ;
- un premier site terminal (100) couplé de façon optique à la ligne de fibre optique (300), pour transmettre des signaux optiques dans ladite ligne de fibre optique ;
- un second site terminal (200) couplé de façon optique à la ligne de fibre optique (300), pour recevoir des signaux optiques depuis ladite ligne de fibre optique ;
- au moins un site de ligne (400) positionné le long de ladite ligne de fibre optique (300) entre les dits premier et second sites terminaux (100, 200) ;

   **caractérisé en ce que** ledit au moins un site de ligne (400) comprend au moins un dispositif (695, 695') de dérivation de canaux optiques selon l'une quelconque des revendications 14 à 34.

**37.** Système de transmission optique comprenant :

- une ligne de fibre optique (300) ;
- un premier site terminal (100) couplé de façon optique à la ligne de fibre optique (300), pour transmettre des signaux optiques dans ladite ligne de fibre optique ;
- un second site terminal (200) couplé de façon optique à la ligne de fibre optique (300), pour recevoir des signaux optiques depuis ladite ligne de fibre optique ;
- au moins un site de ligne (400) positionné le long de ladite ligne de fibre optique (300) entre les dits premier et second sites terminaux (100, 200) ;

   **caractérisé en ce que** ledit au moins un site de ligne (400) comprend au moins une unité (698) de dérivation de canaux optique selon la revendication 35.

Fig. 1

EP 1 088 417 B1

Fig. 2

EP 1 088 417 B1

Fig. 3

Fig. 4

Fig. 5

Fig. 6

Fig. 7

Fig. 8

Fig. 9

EP 1 088 417 B1

λMkr  A:                    B:            B-A:
LMkr  C:                    D:            C-D:

```
                                              Normal (A)
-11.5  REF
 dBm
5.0dB
 /div

-36.5
 dBm



-61.5
 dBm
```
1529.0nm   0.7nm/div  1532.5nm   in vac   1536.0nm
Res:0.2nm              /  Avg:Off      /  Smplg:501  /
VBW:1kHz          /  Sm:Off  /  Intvl:Off  /          /Att Off

# Fig. 10a

λMkr  A:                    B:            B-A:
LMkr  C:                    D:            C-D: 4.1dB

```
                                              Normal (A)
-9.0  REF
 dBm
2.5dB
 /div


-21.5
 dBm




-34.0
 dBm
```
1541.0nm   2.0nm/div  1551.0nm   in vac   1561.0nm
Res:0.2nm              /  Avg:Off      /  Smplg:501  /
VBW:1kHz          /  Sm:Off  /  Intvl:Off  /          /Att Off

# Fig. 10b

λMkr A:   B:   B-A:
LMkr C: -1.52dBm D: -4.08dBm C-D: 2.56dB

Normal (A)

-1.2 dBm
4.0dB /div

-21.2 dBm

-41.2 dBm

1541.0nm 2.0nm/div 1551.0nm in vac 1561.0nm
Res:0.2nm  / Avg:Off  / Smplg:501 /
VBW:1kHz  / Sm:Off / Intvl:Off /  /Att Off

# Fig. 10c

λMkr A:   B:   B-A:
LMkr C:   D:   C-D:

Normal (A)

-32.8 dBm
5.0dB /div

-57.8 dBm

-82.8 dBm

1529.0nm 0.7nm/div 1532.5nm in vac 1536.0nm
Res:0.2nm  / Avg:Off  / Smplg:501 /
VBW:1kHz  / Sm:Off / Intvl:Off /  /Att Off

# Fig. 10d

EP 1 088 417 B1

Fig. 10e

Fig. 10f

λMkr A:                    B:              B-A:
LMkr C:                    D:              C-D:

                                          Normal (A)

-30.8
dBm
4.0dB
/div

-50.8
dBm

-70.8
dBm

        1541.0nm   2.0nm/div   1551.0nm    in vac        1561.0nm
Res:0.2nm              /  Avg:Off        /   Smplg:501   /
VBW:1kHz               /  Sm:Off  /  Intvl:Off  /          /Att Off

## Fig. 10g

λMkr A:                    B:              B-A:
LMkr C:                    D:              C-D:

                                          Normal (A)

-11.5
dBm
5.0dB
/div

-36.5
dBm

-61.5
dBm

        1529.0nm   0.7nm/div   1532.5nm    in vac        1536.0nm
Res:0.2nm              /  Avg:Off        /   Smplg:501   /
VBW:1kHz               /  Sm:Off  /  Intvl:Off  /          /Att Off

## Fig. 10h

Fig. 10i

FIG. 11

EP 1 088 417 B1

FIG. 12A

FIG. 12B